# EUROPEAN PATENT APPLICATION

(11) **EP 4 057 176 A2**
(43) Date of publication of application: **14.09.2022**
(21) Application number: 22157996.4
(22) Date of filing: 22.02.2022
(51) Int. Cl.: G06F 30/17, G06F 30/13, B28B 1/00, B28B 17/00, E04G 21/04, G06F 113/10, G06F 119/18

(54) **METHODS, APPARATUS, AND SYSTEM TO PROVIDE REAL-TIME ADJUSTMENT FOR THE THREE-DIMENSIONAL PRINTING OF ARCHITECTURAL STRUCTURES**

(30) Priority: 23.02.2021 US 202163152569 P
(71) Applicant: Icon Technology, Inc., Austin, TX 78745 (US)
(72) Inventor: Ford, Jason, Austin, TX (US); Le Roux, Alexander, Austin, TX (US); Jensen, Evan, Austin, TX (US)
(74) Representative: K&L Gates LLP

(57) **Abstract**

Methods, apparatuses, and systems to provide real-time adjustment for the three-dimensional printing of architectural structures are disclosed herein. An example apparatus includes a printing control processor configured to receive a model file that specifies a three-dimensional representation of a building structure to be printed. The processor slices the model file into individual layers. Each layer has a height corresponding to a height of a layer to be printed. The processor converts the layers into computerized instructions for a three-dimensional printer. During printing, the processor receives adjustment information that is indicative of an adjustment made by the three-dimensional printer during the printing of a current layer. The processor applies the adjustment information to subsequent computerized instructions that are to be executed after printing the current layer. The processor then executes the computerized instructions for the subsequent layers including causing the three-dimensional printer to print the layers with the adjustment.

## Description

### BACKGROUND

Three-dimensional printing, also known as additive manufacturing, has become common place in many industrial environments. The technology enables components with complex shapes or features to be created by iteratively printing layers of material. In some instances, three-dimensional printing enables some complex designs to be printed that otherwise would be virtually impossible to form through other methods, such as injection molding, etching, or manual assembly. Three-dimensional printing has become popular to the point that companies are looking at unconventional applications.

One application commercialized by the Applicant of this disclosure is three-dimensional printing of architectural structures. Typically in this application, one or more industrial-scale printers are placed on or around a foundation of a building, home, or other structure to be printed. The structures are formed by iteratively printing concrete layers on top of each other. Each layer has a height that is typically between 1/2 inch and two inches. A toolpath of the printer is specified by instructions that define, for example, wall shapes. The instructions may also define gaps in the toolpath (where printing is paused while a printing head moves through a specified location) to create windows, doors, or wall features.

Known controllers for commercial three-dimensional printers typically receive a model file that specifies three-dimensional features of the structure to be printed. The model file may be generated, for example, by a three-dimensional modeling program that permits a designer to create a three-dimensional rendering of the structure. These known controllers perform a slice method that breaks the model file into individual printer-readable instructions for each layer (e.g., G-code/M-code). Each instruction defines a toolpath for the printer head (e.g., a printer assembly) to print the respective layer of the structure. As such, each instruction specifies a height corresponding to a height of the concrete layer printed by the print head. The controllers input serially each sliced layer instruction into the three-dimensional printer to deposit the respective layer of the structure.

The known method for printing three-dimensional structures can become problematic if changes occur during the printing process. For example, changes to the structure's design have to be made by first modifying the model file. The controller of the three-dimensional printer then re-slices the model to then serially transmit the instructions to the printer. Even smaller changes have to go through this inefficient process. For instance during printing, an operator may notice that printed concrete is not being extended all the way into a corner. To get the printer head to move a little further into a corner, the operator has to update and re-slice the model file into the printer-readable instructions. The operator then has to select the next instruction for printing. Alternatively, an operator can override the printer instructions and instead manually move the printer head. However, both solutions are problematic for printing structures. Design changes, even for small structural adjustments, are time consuming and can compound to extend a building process by hours or days, thereby costing the structural printer lost time and profits. On the other hand, manual changes may not be adequately made by even skilled operators, or consistently applied for subsequently printed layers.

### SUMMARY

Improved systems, methods and apparatus are disclosed herein for three-dimensional printing of architectural structures. The example systems, methods, and apparatus are configured to enable real-time or near real-time adjustments to be made to printer-readable instructions (e.g., coded layers) without having to recompile a model file. The systems, methods, and apparatus are configured to apply adjustments to a current instruction for printing. The systems, methods, and apparatus may also apply adjustments to subsequent instructions to ensure printing consistency at increasing heights.

The example systems, methods, and apparatus make adjustments to instructions by receiving an adjustment instruction or otherwise determining that an adjustment was made to an instruction that is being printed. For example, the systems, methods, and apparatus may receive messages that are indicative of manual printer head movement while a layer is being printing. Alternatively, an operator may enter adjustments to a layer being printed via a graphical user interface. Before the next layer is printed, the systems, methods, and apparatus apply, to the next layer, the printing adjustments made to the previous layer. The adjustments include changing toolpath parameters that are defined within the instruction. The toolpath parameters may include a toolpath length, a toolpath start location, a toolpath finish location, a direction along an x and/or y axis, a concrete extrusion rate, and/or specified locations where concrete printing is paused along a toolpath. In some instances, the toolpath parameters may include common printer movement commands specified by a code identifier, such as a G-code number.

In some embodiments, the systems, methods, and apparatus disclosed herein partition a structure into different levels. Each level has a different toolpath such that all layers in one level have the same toolpath. The levels may be defined by height, where a first level may correspond to 0 inches to 24 inches in height from a foundation and a second level may correspond to 24 inches to 40 inches from the foundation. The different levels may be used to define gaps for windows, doors, beams, etc.

In these embodiments, a change to one layer in a level is applied by the systems, methods, and apparatus to remaining layers in the level. However, the systems, methods, and apparatus may be configured to not propagate the adjustments to subsequent levels. Alternatively, the adjustments may be propagated to subsequent levels. The determination to carry over adjustments to other levels may be specified by an operator and/or determined by the systems, methods, and apparatus based on whether the locations of the adjustment are present in subsequent levels. For example, the systems, methods, and apparatus may be configured to propagate an adjustment to wall corners to subsequent levels while adjustments to window or door gaps are not propagated.

In some embodiments, the systems, methods, and apparatus are configured to print a defined number of layers for each level. In other embodiments, the systems, methods, and apparatus are configured to print as many layers as needed to reach a desired end (top) height of a level. These other embodiments may provide compensation for concrete printing, where almost a half-inch of planned height is lost for each foot of printed wall.

As described herein, the systems, methods, and apparatus are configured to generate parameters for instructions that more accurately match dimensions in a model file. In one example, the systems, methods, and apparatus partition a model file into many more instructions each having a height that is a fraction of a height of a printed layer. For example, 100 printed layers (each having a height of 0.5 inches) may be necessary to form a structure. However, 1000 layer instructions (each having a height of 0.05 inches) may be generated by the systems, methods, and apparatus. At any given height, there are approximately ten to fifteen layer instructions that are available for selection. The systems, methods, and apparatus select the layer instruction that most closely matches the model file at the respective height. In this embodiment, the systems, methods, and apparatus may use adjustments made to a previous layer in selecting a closely matching layer. Additionally or alternatively, the systems, methods, and apparatus may average or perform an interpolation of the available layer instructions for determining parameters of a layer instruction for printing.

In some embodiments, the systems, methods, and apparatus are configured to automatically generate a model file for an operator. In these embodiments, the systems, methods, and apparatus provide build planning functions for printing different three-dimensional structures. The building plans may be for residential structures, commercial structures, government structures, garages, storage sheds, warehouses, utility lines, walls, tunnels, launch pads, furniture, and/or landscaping elements. Each of the build planning functions is associated with different configurations of input data and includes global build data for building the respective structure.

The example systems, methods, and apparatus prompt an operator or a designer for input parameters for customizing the building plan. The input parameters are unique for each building plan may include site/location data, code requirements, owner preferences, and builder preferences. The systems, methods, and apparatus use at least one build function of the build planning function, the global build data, and the input parameters to create a build plan (e.g., a model file) having a list of actions for a structural three-dimensional printer. The build plan may include placement once information, placement level information, a parametric build function that specifies a printing action based on pre-specified data, and/or a transform function that specifies toolpath variation based on specified coordinates. The systems, methods, and apparatus then convert the build plan to layer instructions (e.g., G-code) and transmit the instructions serially to a three-dimensional printer.

In some embodiments, the systems, methods, and apparatus disclosed herein determine where to place interior walls (and/or a thickness of interiors walls) as part of the build plan creation. This may include calculating load points for a roof or an upper floor. This may also include calculating a toolpath that enables continuous printing for each layer. This may further include identifying start and stop locations for a toolpath to hid seams. In some instances, the start and stop locations may be specified to be at a door or window, which is easier to hid using wood trim.

In light of the disclosure set forth herein, and without limiting the disclosure in any way, in a first aspect of the present disclosure, which may be combined with any other aspect, or portion thereof, described herein a three-dimensional print control apparatus includes a memory device storing a model file of a building structure to be printed. The model file specifies a three-dimensional representation of the building structure. The apparatus also includes a control processor communicatively coupled to the memory device. The control processor is configured to receive a message that the model file is to be printed by a robotic three-dimensional printer to form the building structure and partition the model file into individual layers. Each layer has a height corresponding to a height of a printed layer by the robotic three-dimensional printer. The control processor is also configured to convert the layers into computerized instructions for the robotic three-dimensional printer. Each of the computerized instructions specifies at least a height specified in a z-dimension and a toolpath having a direction and a length specified in x and y-dimensions. The control processor is further configured to transmit a first computerized instruction for a first layer to the robotic three-dimensional printer causing the robotic three-dimensional printer to print the first layer of a first print level and receive adjustment information that is indicative of an adjustment made by the robotic three-dimensional printer during the printing of the first layer of the first print level. The control processor applies the adjustment information to at least a second computerized instruction for a second layer of the first print level. The control processor is then configured to transmit the second computerized instruction to the robotic three-dimensional printer causing the robotic three-dimensional printer to print the second layer of the first print level including the adjustment made during the printing of the first layer.

In a second aspect of the present disclosure, which may be combined with any other aspect, or portion thereof, described herein, the adjustment information is received from an interface device or from the robotic three-dimensional printer and corresponds to a manual change that causes the robotic three-dimensional printer to deviate from at least some of the first computerized instructions.

In a third aspect of the present disclosure, which may be combined with any other aspect, or portion thereof, described herein, the adjustment information includes a change to at least one of the height of the first level, the toolpath of the first level, or the height of the first layer.

In a fourth aspect of the present disclosure, which may be combined with any other aspect, or portion thereof, described herein, the control processor is configured to apply the adjustment information to remaining computerized instructions for the first print level.

In a fifth aspect of the present disclosure, which may be combined with any other aspect, or portion thereof, described herein, the control processor is configured to apply the adjustment information to remaining computerized instructions for layers that are to be printed on top of the first layer.

In a sixth aspect of the present disclosure, which may be combined with any other aspect, or portion thereof, described herein, the height of each layer is between 0.5 inches and 2 inches for printing concrete and the height of the levels are between 2 inches and fifty feet.

In a seventh aspect of the present disclosure, which may be combined with any other aspect, or portion thereof, described herein, each of the printing levels includes a print start location and a print finish location for the layers of the respective printing level.

In an eighth aspect of the present disclosure, which may be combined with any other aspect, or portion thereof, described herein, at least one of the printing levels includes a print start pause location and a print finish pause location for the layers of the respective printing level.

In a ninth aspect of the present disclosure, which may be combined with any other aspect, or portion thereof, described herein, the first computerized instructions and the second computerized instructions include G-code for a toolpath of the robotic three-dimensional printer.

In a tenth aspect of the present disclosure, which may be combined with any other aspect, or portion thereof, described herein, the model file includes at least one of a two-dimensional or a three-dimensional digital representation of the building structure.

In an eleventh aspect of the present disclosure, which may be combined with any other aspect, or portion thereof, described herein, the building structure includes at least one of a residential structure, a commercial structure, a government structure, a garage, a storage shed, a warehouse, utility lines, a wall, a tunnel, a launch pad, furniture, or a landscaping element.

In a twelfth aspect of the present disclosure, which may be combined with any other aspect, or portion thereof, described herein, the control processor partitions the model file by creating two-dimensional cross-sections at different heights of the building structure.

In a thirteenth aspect of the present disclosure, which may be combined with any other aspect, or portion thereof, described herein, a model generation method for printing three-dimensional structures, includes receiving, in a build processor, a selection of a build planning function, among a plurality of build planning functions stored in a memory device, for printing a three-dimensional structure related to the selected build planning function. The method also includes determining, via the build processor, global build data associated with the selected build planning function and prompting, via the build processor on a user interface, a user to provide input parameters including site/location data, code requirements, owner preferences, and builder preferences. The method further includes using, via the build processor, at least one build function of the build planning function, the global build data, and the input parameters to create a build plan having a list of actions for a robotic three-dimensional printer and transmitting at least some of the build plan as G-code to the robotic three-dimensional printer for printing the three-dimensional structure.

In a fourteenth aspect of the present disclosure, which may be combined with any other aspect, or portion thereof, described herein, the build plan includes placement once information, placement level information, a parametric build function that specifies a printing action based on pre-specified data, or a transform function that specifies toolpath variation based on specified coordinates.

In a fifteenth aspect of the present disclosure, which may be combined with any other aspect, or portion thereof, described herein, the plurality of build planning functions includes build planning functions for at least one of a residential structure, a commercial structure, a government structure, a garage, a storage shed, a warehouse, utility lines, a wall, a tunnel, a launch pad, furniture, or a landscaping element.

In a sixteenth aspect of the present disclosure, which may be combined with any other aspect, or portion thereof, described herein, each of the plurality of build planning functions are associated with different configurations of input data.

In a seventeenth aspect of the present disclosure, which may be combined with any other aspect, or portion thereof, described herein, the global build data includes at least one of standard international building code data, climate zone data, historical weather, data, or seismic zone data.

In an eighteenth aspect of the present disclosure, which may be combined with any other aspect, or portion thereof, described herein, the prompting includes providing, via the building processor, a selection of a template from a plurality of templates, each template including a data structure having variable parameter references provided by the user to specify the respective parameter.

In a nineteenth aspect of the present disclosure, which may be combined with any other aspect, or portion thereof, described herein, the plurality of templates includes one or more templates for each of the site/location data, the code requirements, the owner preferences, and the builder preferences.

In a twentieth aspect of the present disclosure, which may be combined with any other aspect, or portion thereof, described herein, the build plan includes a transfer function that changes a toolpath based on at least one of a timestamp when the printing is performed, live data from an Internet feed, or a locally-connected sensor.

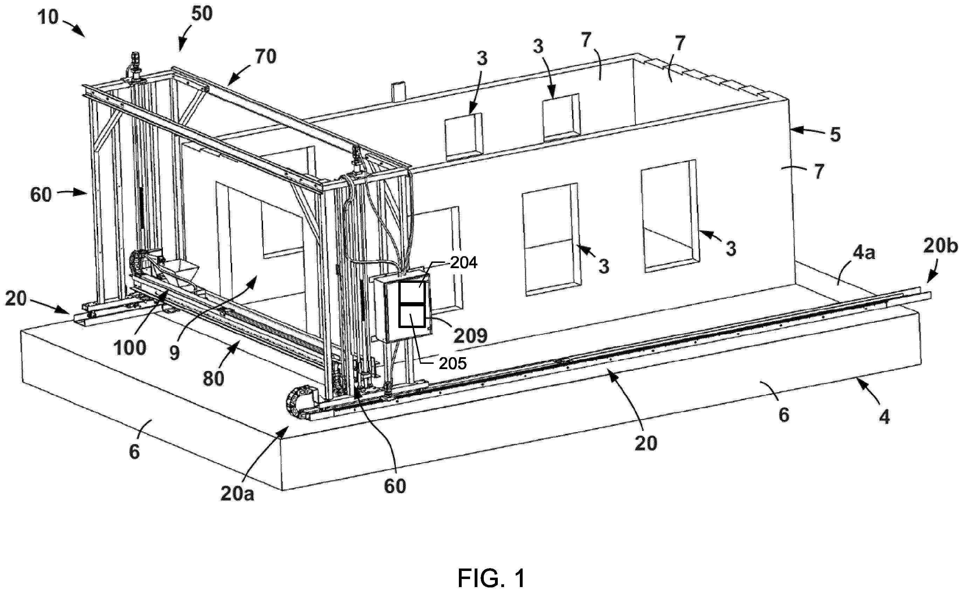

In a twenty-first aspect, any of the features, functionality and alternatives described in connection with any one or more of Figs. 1 to 26 may be combined with any of the features, functionality and alternatives described in connection with any other of Figs. 1 to 26.

In light of the present disclosure and the above aspects, it is therefore an advantage of the present disclosure to provide a three-dimensional printing system in which printing adjustments are applied directly to printer readable instructions (e.g., G-code) rather than updating a build model.

It is another advantage of the present disclosure to use build planning functions to automatically create a model and/or printer instructions using input from a builder or an owner.

Additional features and advantages are described in, and will be apparent from, the following Detailed Description and the Figures. The features and advantages described herein are not all-inclusive and, in particular, many additional features and advantages will be apparent to one of ordinary skill in the art in view of the figures and description. Also, any particular embodiment does not have to have all of the advantages listed herein and it is expressly contemplated to claim individual advantageous embodiments separately. Moreover, it should be noted that the language used in the specification has been selected principally for readability and instructional purposes, and not to limit the scope of the inventive subject matter.

### BRIEF DESCRIPTION OF THE FIGURES

Figs. 1 and 2 are diagrams of an example three-dimensional printing system, according to an example embodiment of the present disclosure.
Fig. 3 is a diagram of a three-dimensional printing environment in which the three-dimensional printing system of Figs. 1 and 2 may operate, according to an example embodiment of the present disclosure.
Fig. 4 is a diagram of a graphical interface of an application operating on an interface device of the three-dimensional printing environment of Fig. 3, according to an example embodiment of the present disclosure.
Fig. 5 is a diagram of a data structure that is representative of instructions stored in a memory for printing a three-dimensional structure in the three-dimensional printing environment of Fig. 3, according to an example embodiment of the present disclosure.
Fig. 6 is a flow diagram of an example procedure to apply adjustments in real-time or near real-time to subsequent printer instructions during a three-dimensional printing of a structure, according to an example embodiment of the present disclosure.
Fig. 7 is a diagram that is illustrative of adjustments applied in real-time between printings of subsequent layers of a structure, according to an example embodiment of the present disclosure.
Fig. 8 is a diagram that shows how build planning functions are used for creating a building plan, which is used for creating a model file for three-dimensionally printing a structure, according to an example embodiment of the present disclosure.
Figs. 9 and 10 are diagrams of software code for different build planning functions, according to example embodiments of the present disclosure.
Fig. 11 is a diagram of a graphical user interface that may be displayed by an interface device for populating variables/parameters of a build planning function, according to an example embodiment of the present disclosure.
Fig. 12 is a flow diagram of an example procedure for creating a model file for three-dimensional printing of a structure, according to an example embodiment of the present disclosure.
Figs. 13 to 26 are diagrams illustrative of an example process for converting a build plan and/or a model file into printer instructions, according to an example embodiment of the present disclosure.

### DETAILED DESCRIPTION

An example system, method, and apparatus for printing three-dimensional architectural structures are disclosed herein. The example system, method, and apparatus are configured to receive real-time or near real-time adjustments made during printing. The adjustments are applied by the system, method, and apparatus directly to printer-readable instructions (e.g., G-code or M-code) without having to recompile a source model file. By applying the adjustments directly to layer instructions, the example system, method, and apparatus make the printing of architectural structures more efficient.

Known three-dimensional printers operate based off of a three-dimensional model file. As disclosed herein, the three-dimensional model file defines dimensions of a structure to enable rendering in a modeling program. During printing, the three-dimensional model file is sliced into individual layer instructions specified by G-code, M-code, or similar printer-readable instructions. The slicing converts a three-dimensional structure into an array of two-dimensional slices at different heights, similar to individual slices of a computed tomography ("CT") scan. In some instances, the three-dimensional structure is first sliced into an array of two-dimensional structures, which are then converted into printer-readable instructions, such as G-code. Each of the layers has a height between 0.25 and 2 inches, preferably around 0.5 inches. The height of each layer corresponds to a concrete height deposited by a print head or nozzle during the printing of a single line or thread. Typically, this slicing process is time intensive because 50 to 250 different layers have to be generated from the three-dimensional model file. Common slicing times can range between five minutes to thirty minutes.

As one can appreciate, printing an architectural structure is an inexact science. Oftentimes, wet concrete properties slightly change the dimensions of the printed structure. Further, small gaps in a model may yield noticeable gaps in a structure. Regardless of the deviations, operators of industrial three-dimensional printers oftentime make manual correcting adjustments during the printing process. Anytime a correction is made, the changed dimensions of the structure have to be updated in the original three-dimensional model file. This requires an operator to open the three-dimensional model file in a modeling program, make the changes, and then cause the amended three-dimensional model file to be re-sliced into the layer instructions. While time consuming, this process ensures that manual printing changes are reflected in subsequently printed layers. A drawback to this process, however, is that the time to print a structure could be extended by hours to days if a significant number of manual adjustments are made.

The system, method, and apparatus solve the above-issue with known three-dimensional printing systems by instead applying adjustments directly to subsequent layer instructions. The system, method, and apparatus are configured to receive from an operator an indication of the adjustments, such as changes to linear interpolation, circular interpolation, dwell, plane selection, extrusion rate, etc. Alternatively, the system, method, and apparatus detect manual adjustments made to the printer, which are then applied to the subsequent layers.

Reference is made herein to layer instructions and toolpath parameters. As disclosed herein, layer instructions refer to printer-readable code that specifies how a printer is to deposit a thread of concrete. A layer instruction may be specified in G-code, M-code, or another other machine language for commanding three-dimensional printers. The layer instructions (e.g., coded layers) are defined by parameters, which includes codes and variables. The parameters define, for example, the operations to be performed by a three-dimensional printer. As disclosed above, the parameters may define linear interpolation, circular interpolation, dwell, plane selection, deposition rate, a toolpath length, a toolpath start location, a toolpath finish location, a, direction along an x and/or y axis, and/or specified locations where concrete printing is paused along a toolpath. Parameters may also be specified by functions. For example, curvature of a wall may be defined, in part, by a random function. During printing, a printer controller generates a random value from the function, which is then applied to a parameter of a layer instruction. A single layer may include many different printer operations, such as to define wall curvature, door/window openings, etc. In some embodiments, a layer instruction may include a series of coded instructions and parameters for continuously printing a single layer through the different structural features.

Reference is also made herein to architectural structures and concrete. An architectural structure may include any building or building feature that can be three-dimensionally printed. For example, an architectural structure can include a residential structure, a commercial structure, a government structure, a garage, a storage shed, or a warehouse. An architectural structure may also include utility lines, walls, tunnels, launch pads, furniture, or landscaping elements.

As disclosed herein, concrete is printed to form the architectural structures. However, it should be appreciated that other substances could be printed including nylon, thermoplastic, copper, bronze, stainless steel, rubber, cement, mortar, etc. In some embodiments, the system, method, and apparatus disclosed herein are configured to print an architectural structure using two or more materials, where separate layers may be printed using different materials. For example, a metal or thermoplastic may be printed as a top layer on a concrete wall.

### Three-Dimensional Printing Embodiment

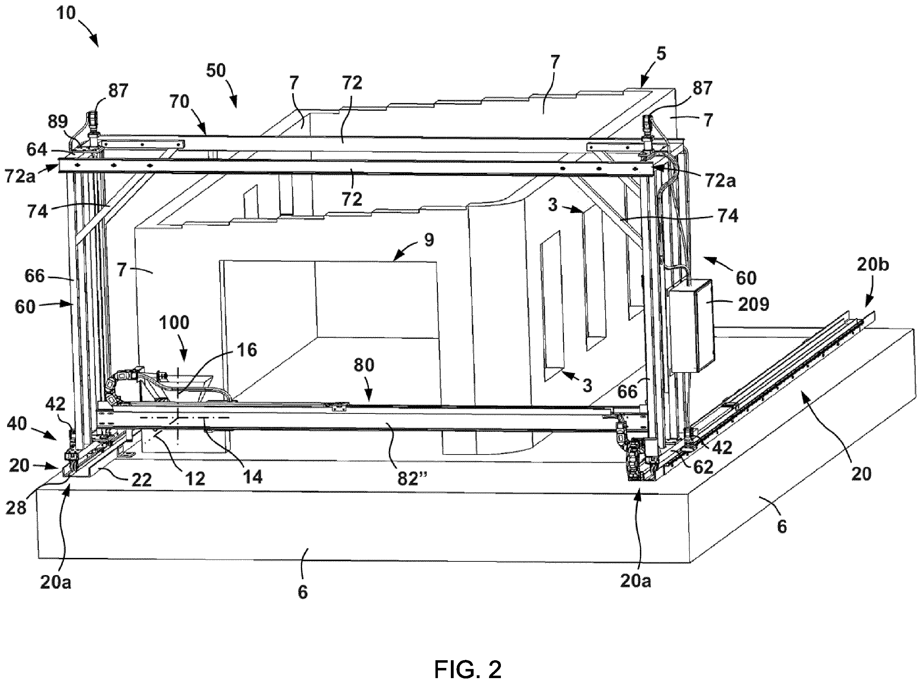

Figs. 1 and 2 are diagrams of an example three-dimensional printing system 10 (e.g., a robotic three-dimensional printer), according to an example embodiment of the present disclosure. The three-dimensional printing system 10 includes a pair of rail assemblies 20, a gantry 50 movably disposed on the rail assemblies 20, and a printing assembly 100 movably disposed on the gantry 50. The three-dimensional printing system 10 is configured to form a structure via additive manufacturing, specifically three-dimensional ("3D") printing. In particular, the system 10 (via the rail assemblies 20 and the gantry 50) is configured to controllably move or actuate the printing assembly 100 relative to a foundation 4 of a structure 5 along each of a plurality of orthogonal movement axes or directions 12, 14, 16 such that the printing assembly 100 may controllably deposit an extrudable building material in a plurality of vertically stacked layers to form the structure 5. As shown in Fig. 2, the axes 12, 14, 16 are each orthogonal to one another - with axis 12 being orthogonal to both axes 14, 16, axis 14 being orthogonal to axes 12 and 16, and axis 16 being orthogonal to axes 12 and 14. In addition, an origin (not shown) of axes 12, 14, 16 is generally disposed or defined at the printing assembly 100.

As shown in Fig. 1, the structure 5 includes a plurality of walls 7, a plurality of windows 3 extending through the walls 7, and a door frame 9 also extending through one of the walls 7. The structure 5 is formed upon a foundation 4. In this embodiment, the foundation 4 is a reinforced concrete slab that is formed by first building an exterior form or mold (not shown), then placing a plurality of metallic rods (e.g., rebar) within the form in a desired pattern (e.g., in a grid pattern), and finally filling the mold with liquid or semi-liquid concrete mixture. Once the concrete has sufficiently dried and/or cured (e.g., such that the foundation 4 may support the weight of structure 5), the structure 5 may be constructed (e.g., printed) atop the foundation 4 using the construction system 10. As shown in Fig. 1, the foundation 4 includes a planar (or substantially planar) top surface 4a and a perimeter 6. In some embodiments, the axes 12 and 14 form or define a plane that is parallel to top surface 4a of the foundation 4, and axis 16 extends in a normal direction from the top surface 4a. Thus, in instances where the top surface 4a is substantially level (or perpendicular to the direction of gravity), the axes 12, 14 define a level, horizontal or lateral plane, and axis 16 defines the vertical direction.

Referring Fig. 2, in this embodiment, each rail assembly 20 is disposed on top surface 4a of foundation and includes a first end 20a, a second end 20b opposite first end 20a, and a central axis therebetwen. The axes of rail assemblies 20 are parallel and radially spaced from one another across the op surface 4a such that the first ends 20a and the second ends 20b of the rail assemblies 20 are generally aligned with one another across the top surface 4a. In addition, each of the axes of the rail assemblies 20 extend parallel to the axis 12 (and thus, each axis also extends in a direction that is perpendicular to the direction of axis 14 and the direction of axis 16).

Referring again to Figs. 1 and 2, the gantry 50 generally includes a pair of vertical support assemblies 60, an upper bridge assembly 70 spanning between vertical support assemblies 60, and a trolley bridge assembly 80 also spanning between vertical support assemblies 60, below the upper bridge assembly 70. Each of the vertical support assemblies 60 is movably coupled to a corresponding one of the rail assemblies 20 so that vertical support assemblies 60 may traverse along the axis 12 during operations. In addition, the trolley bridge assembly 80 is movably coupled to each of the vertical support assemblies 60 so that the trolley bridge assembly 80 may traverse along the axis 16 during operations. Each vertical support assembly 60 includes a first or lower support girder 62, and a second or upper support girder 64 axially spaced from lower support girder 62. In addition, the vertical support assembly 60 includes a plurality of support legs 66 extending axially between the girders 62, 64. Each vertical support assembly 60 further includes a pair of roller assemblies that are coupled to the lower support girder 62. Each roller assembly includes a corresponding roller that engages with the corresponding rail assembly 20.

Also, as shown in Figs. 1 and, 2, a lateral actuation assembly 40 is coupled between each vertical support assembly 60 and the corresponding rail assembly 20 (that is, there is a corresponding lateral actuation assembly 40 coupled between each vertical support assembly 60 and corresponding rail assembly 20 within construction system 10). However, it should be appreciated that in other embodiments, a single lateral actuation assembly 40 is coupled between a select one of the vertical support assemblies 60 and a corresponding one of the rail assemblies 20. Each lateral actuation assembly 40 generally comprises a driver 42 and a connection block assembly for coupling the driver 42 to the lower girder 62 of vertical support assembly 60.

During operation, the driver 42 of each lateral actuation assembly 40 is selectively actuated to rotate a corresponding shaft. Due to the engagement between the shafts and the rail assemblies 20, the rotation of shafts 41 about corresponding axes causes traversal of each vertical support assembly 60 axially along the corresponding rail assembly 20 with respect to the axis 12. Accordingly, the actuation of the drivers 42 causes movement or translation of the gantry 50 along the axis 12 relative to the foundation 4.

As shown in Fig. 2, the upper bridge assembly 70 includes a pair of girders 72 that are mounted to and span between the upper girders 64 of the vertical support assemblies 60. In particular, each girder 72 includes a first end 72a and a second end 72b opposite first end 72a. The first end 72a of each girder 72 is mounted or secured to the upper girder 64 of one vertical support assembly 60, and the second end 72b of each girder 72 is mounted or secured to upper girder 64 of the other vertical support assembly 60. In this embodiment, each girder 72 extends in a direction that is parallel to the axis 14. However, such precise alignment is not achieved in some embodiments. In addition, the upper bridge assembly 70 further includes a plurality of cross-braces 74, each extending between a corresponding one of the girders 72 to a corresponding one of the support legs 66 of vertical support assemblies 60. Accordingly, the vertical support assemblies 60 are secured to one another via the upper bridge assembly 70, so that each of the vertical support assemblies 60 are moved together about the top surface 4a of the foundation 4 along the axis 12 during printing operations.

Referring still to Fig. 2, the trolley bridge assembly 80 includes a pair of girders 82', 82" (namely a first girder 82' and a second girder 82") coupled to and spanning between the vertical support assemblies 60. In addition, the printing assembly 100 is movably coupled to the girders 82', 82". The girders 82', 82" of the trolley bridge assembly 80 are movably coupled to the vertical support assemblies 60, such that the girders 82', 82" may traverse along the axis 16 during operations. In addition, the printing assembly 100 is movably coupled to the girders 82', 82" such that the printing assembly 100 is configured to traverse along the axis 14 between the girders 82', 82" during operations.

In an embodiment, a driver 87 for the trolley bridge assembly 80 includes an electric motor (e.g., a servo motor) that is configured to rotate a threaded rod in either a clockwise or counterclockwise direction about a central or longitudinal axis. During operations, the driver 87 selectively rotates the threaded rod so that the threaded rod causes the girders 82', 82" to translate axially between ends of the assembly 80 (and the axis 16). Accordingly, the actuation of the driver 87 is configured to translate the trolley bridge assembly 80 and printing assembly 100 along the axis 16 during operations. The threaded rods may include a lower end mounted to the lower girder 62 via a mounting plate, and a second or upper end cooperatively engaged within the driver 87 that is mounted to the upper girder 64 via a mounting plate 89.

As shown in Fig. 2, the printing assembly 100 is coupled to the girders 82', 82" and is configured to move or translate between ends of the girders 82', 82" along the axis 14 during operations. Accordingly, the printing assembly 100 is movably supported between girders 82 via a pair of trolley members.

The printing assembly 100 (e.g., a print head or nozzle) includes a supply conduit, a hopper, a pump assembly, and an outflow conduit. The supply conduit is configured to deliver an extrudable building material (e.g., a cement mixture) from a source, which may comprise any suitable tank or vessel that is configured to contain a volume of extrudable building material therein. For example, in some embodiments, the source may comprise a tank, a cement mixer (e.g., such as that found on a stand-alone cement mixer or on a cement truck), or other suitable container. The source may be disposed immediately adjacent the foundation 4 and the gantry 50, or may be relatively remote from the foundation 4 and the gantry 50.

The conduit comprises a hose and an outlet that is disposed above the hopper so that cement emitted from outlet is provided into hopper during operations. The hopper includes a plurality of converging walls that converge toward one another from an upper end to an extrusion end. As a result, extrudable building materials that is emitted into to hopper (e.g., from the outlet of the supply conduit) is funneled or channeled toward the lower end by the converging walls under the force of gravity.

A pump assembly is coupled to a lower end of the hopper and includes a pump housing 104 and a driver. While not specifically shown, the driver may comprise any suitable driver or prime mover. In this embodiment, the driver comprises an electric motor that is configured to rotate a screw within the pump housing to advance extrudable building material within the housing into the outflow conduit of the printing assembly 100. In an example, the driver rotates the screw such that the helical blades (not specifically shown) engage with and advance a building material within the pump housing toward the outflow conduit. Thereafter, the extrudable building material flows through the outflow conduit and out of an outlet of the printing assembly 100 so that is may be deposited at a desired location along the foundation 4 (or on previously deposited or printed building material).

Referring again to Figs. 1 and 2, during a construction operation, the printing assembly 100 is traversed along the axes 12, 14, 16 about the foundation 4 via the gantry 50 and the rail assemblies 20. Simultaneously, the printing assembly 100 is actuated to extrude or deposit building material (e.g., a cement mixture) in a plurality of vertically stacked layers thereby forming the structure 5. In addition, the printing assembly 100 is traversed along the axis 14 via actuation of a driver and the engagement with the girder 82" of the trolley bridge assembly 80. Further, the printing assembly 100 is traversed along the axis 16 via actuation of drivers 87 and the threaded engagement between threaded rods and the corresponding threaded collars on the trolley bridge assembly 80. Thus, the selective actuation of drivers causes the printing assembly 100 to be controllably maneuvered within a plane that is parallel to the top surface 4a of the foundation 4, and the selective actuation of the drivers causes the printing assembly 100 to be controllably translated vertically (or along the axis 16).

The actuation of drivers may be monitored and controlled by a controller 209, which may comprise any suitable device or assembly that is capable of receiving an electrical or informational signal and transmitting various electrical, mechanical, or informational signals to other devices. In particular, in this example, the controller 209 includes a processor 204 and a memory 205. The processor 204 (e.g., microprocessor, central processing unit, or collection of such processor devices, etc.) executes machine readable instructions stored on the memory 205 to enable the processor 204 to perform the functionality described herein. The memory 205 may comprise volatile storage (e.g., random access memory), non-volatile storage (e.g., flash storage, read only memory, etc.), or combinations of both volatile and non-volatile storage. Data consumed or produced by the machine readable instructions can also be stored on the memory 205. A suitable power source may also be included within or coupled to the controller 209 to provide electrical power to the components within controller 209 (e.g., the processor 204, the memory 205, etc.). The power source may comprise any suitable source of electrical power such as, for example, a battery, capacitor, a converter or a local power grid, etc.

The controller 209 may be coupled to each of the drivers via a plurality of communication paths, which may comprise any suitable wired (e.g., conductive wires, fiber optic cables, etc.) or wireless connection (e.g., Wi-Fi, Bluetooth^{®}, near field communication, radio frequency communication, infrared communication, etc.). In this embodiment, communications paths comprise conductive wires that are configured to transmit power and/or communication signals during operations.

During operation, the controller 209 selectively actuates drivers to controllably maneuver the printing assembly 100 along each of the axes 12, 14, 16, as previously described. Additionally, the controller 209 also actuates a pump assembly and pump to controllably emit extrudable building material from the outlet of an outflow conduit, as previously described. Specifically, the controller 209 selectively maneuvers the printing assembly 100 along the axes 12, 14, 16 and emits building material from an outlet per machine readable instructions (e.g., software or G-code) that is stored on the memory 205 and executed by the processor 204. It should be appreciated that by executing the machine readable instructions, layers of cement are deposited on the foundation 4 such that a structure (e.g., the structure 5) is formed or printed vertically from the foundation upward via the three-dimensional printing system 10. As shown in Figs. 1 and 2, the controller 209 is mounted or secured to one of the vertical support assemblies 60 of the gantry 50. However, it should be appreciated that the location of controller 209 may be varied in other embodiments. For example, the controller 209 may be located remotely from the gantry 50.

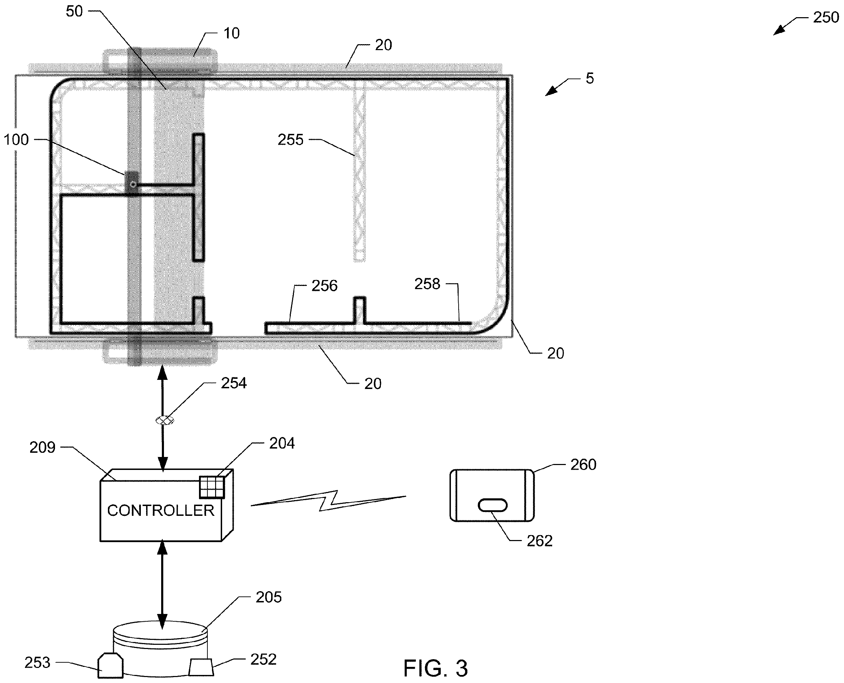

Fig. 3 is a diagram of a three-dimensional printing environment 250 in which the three-dimensional printing system 10 of Figs. 1 and 2 may operate, according to an example embodiment of the present disclosure. In the illustrated example, a three-dimensional printing system 10 is configured to print a structure 5 at a build site. The three-dimensional printing system 10 includes rail assemblies 20 that are provided along a length of a foundation 4 for movement of the gantry 50 and the printing assembly 100.

As disclosed above in connection with Figs. 1 and 2, the three-dimensional printing system 10 is controlled via a controller 209 having a processor 204 and a memory 205. In the illustrated example, the controller 209 is located remotely and in communication with the three-dimensional printing system 10. The memory 205 includes at least a model file 252 (e.g., a computer aided design ("CAD") file) that specifies three-dimensional dimensions for the structure 5. The processor 204 of the controller 209 is configured to slice the model file 252 into two-dimensional cross-sections of different heights of the structure 5. The processor 204 is then configured to convert the two-dimensional cross-sections into printer-readable instructions 253 (e.g., a coded layer), such as G-code or M-code, which are stored in the memory 205. The controller 209 may then control drivers of the three-dimensional printing system 10 by sending signals 254, which cause the drives to actuate motors as specified by the signals. The signals 254 cause the three-dimensional printing system 10 to print a layer of the structure 5 as defined by the printer-readable instructions. In other embodiments, the controller 209 transmits the signals 254 as the printer-readable instructions, which are translated by an on-board controller into driver signals. During operation, the processor 204 serially accesses the instructions 253 as each respective layer is printed.

In the illustrated example, the controller 209 causes the three-dimensional printing system 10 to extrude concrete along a toolpath 255 that is defined by the printer-readable instructions (e.g., a coded layer). Bolded areas shown along the toolpath 255 represent areas 256 where concrete has already been extruded for the present layer. Point 258 represents a start of the toolpath 255.

As shown in Fig. 3, the controller 209 is communicatively coupled to an interface device 260. While the interface device 260 may be wirelessly coupled (e.g., via Bluetooth^{®}, Zigbee^{®}, Wi-Fi, etc.) to the controller 209, in other examples, the interface device 260 may be hardwired and/or integrated with the controller 209. Further, while Fig. 3 shows the interface device 260 as a tablet computer or a smartphone, in other embodiments, the interface device 260 may include a laptop computer, a workstation, a server, and/or a controller for the three-dimensional printing system 10.

The interface device 260 may include a software application 262 that is configured to provide a graphical interface for controlling the three-dimensional printing system 10. The graphical interface may accept manual adjustments for printing the structure 5. The graphical interface may also display a status of the three-dimensional printing system 10 and/or a rendering of the structure 5 to be formed.

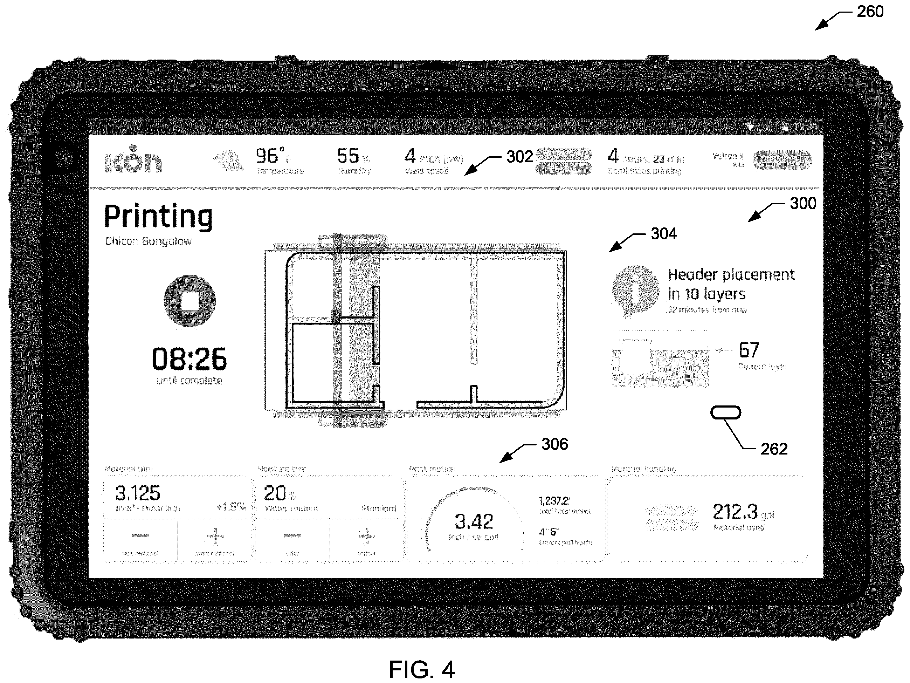

Fig. 4 is a diagram of a graphical interface 300 of the application 262 operating on the interface device 260, according to an example embodiment of the present disclosure. The graphical interface 300 includes an environment section 302, which is configured to display current weather and a total duration of continuous printing of the three-dimensional printing system 10. The graphical interface 300 also includes a status section 304, which includes a diagram of the structure 5 including a planned toolpath, current location of the three-dimensional printing system 10, and areas where concrete has already been extruded. The status section 304 also includes an indication as to when the three-dimensional printing system 10 will complete printing of the current layer and a current layer number (e.g., height along the axis 16).

The graphical interface 300 further includes a control section 306. As shown in Fig. 3, the control section 306 includes graphical controls for material trim (e.g., volume of concrete exuded per a linear distance), a moisture trim of the concrete, a print speed, and material handling information. In some embodiments, the control section 306 may also include controls for manually moving the printer assembly 100 on the gantry 50 to make manual adjustments. As disclosed herein, the manual adjustments may include moving the printer assembly 100 along one or more of the axes 12, 14, and 16 in a manner that deviates from the planned toolpath. The manual adjustments may also include changing a start point, an endpoint, or a pause point for the toolpath. An operator may change values within the control section to change how the controller 209 operates the three-dimensional printing system 10.

In this example, adjustments entered by an operator into the graphical interface 300 are transmitted to the controller 209, which converts the adjustments into printer-readable instructions, such as G-code. The example controller 209 is also configured to store the adjustments to the memory 205. As described herein, the processor 204 of the controller 209 applies the adjustments to one or more subsequent layers (specified by the corresponding instructions 253) so that the manual adjustments are automatically propagated instead of having to regenerate and re-slice the model file 252.

In instances where the gantry 50 and/or the printer assembly 100 are manually moved (via hand controls on the three-dimensional printing system 10), the controller 209 receives position feedback from the motor drivers. The processor 204 of the controller 209 determines how the position feedback corresponds to deviations in the current print instructions, and stores to the memory 205 the deviations as adjustments. The processor 204 then applies the adjustments to subsequent layer instructions.

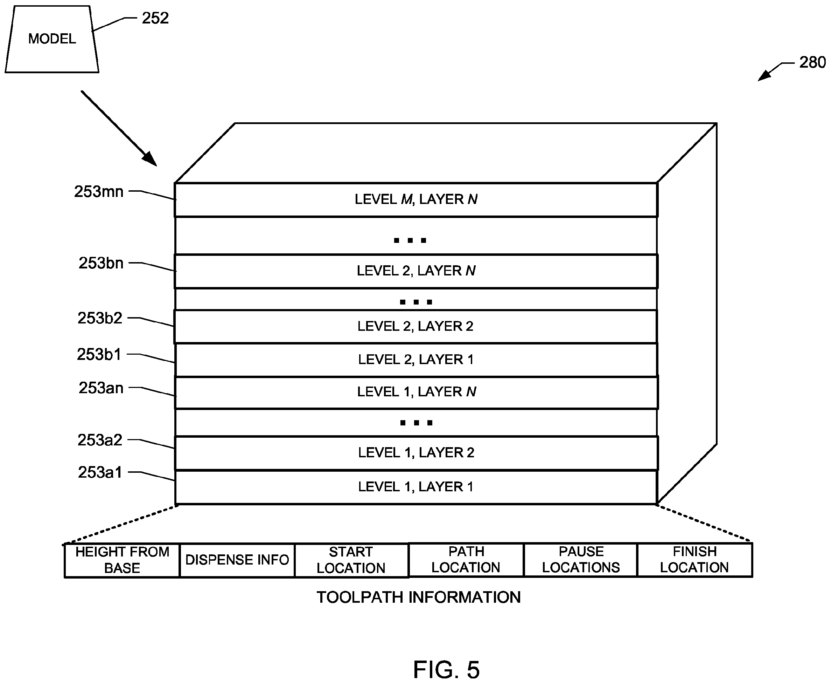

Fig. 5 is a diagram of a data structure 280 that is representative of the instructions 253 stored in the memory 205, according to an example embodiment of the present disclosure. In the illustrated example, the controller 209 creates the printer-readable instructions from the model file 252. This may include slicing the three-dimensional structure defined by the model file 252 into two-dimensional cross-section planes. The controller 209 then creates instructions 253 for each slice that specifies how the three-dimensional printing system 10 is to print the two-dimensional structure in a continuous motion. The instructions 253 specify, for example, a toolpath with changes along the axes 12 and 14 over a specified distance from a starting location.

As shown in Fig. 5, each instruction 253 includes one or more fields (e.g., codes or variables) having a parameter. The fields may include a height from a base field, a extrusion rate (e.g., dispense info), a toolpath start location specified in coordinates of a two or three dimensional coordinate system, toolpath coordinates, locations along the toolpath where extrusion is paused, and/or a toolpath finish location. It should be appreciated that the fields are only exemplary and the instructions 253 may include fewer or additional fields. For example, fields for a radius of curvature may be specified in instances where curved walls or other features are to be printed. In other embodiments, each instruction 253 may include sub-instructions or code for each significant movement of the printer assembly 100 in the gantry 50.

The example instructions 253 are stored in a serial manner, where a first instruction 253al is executed first by the processor 204 of the controller 209. After a layer corresponding to the first instruction 253al has been printed, the processor 204 executes a second, next instruction 253a2. Before printing of the second layer begins, the second instruction 253a2 instructs the gantry 50 to be raised to a subsequent height, such as by 1/2 inch, and returned to the start location. The processor 204 continues until the last instruction 253mn has been executed.

As discussed above, the controller 209 is configured to apply adjustments to subsequent layers. In an example, the processor 204 may be executing instruction 253b1, which corresponds to a mid-height level of a structure. The processor 204 receives information indicative that a manual adjustment of the gantry 50 has occurred. In this example, the manual adjustment may include moving the gantry 50 an extra three inches along the axis 14 starting at coordinate (a60, b17) before making a right turn. The processor 204 adds to the next instruction (i.e., instruction 253b2) the three inches to the toolpath at the identified location before a sub-instruction to turn right. Accordingly, when the instruction 253b2 (with the adjustment) is executed, the processor 204 causes the three-dimensional printing system 10 to automatically incorporate the adjustment.

In some embodiments, the processor 204 is configured to apply the adjustment to all subsequent layers corresponding to instructions 253b2 to 253mn. In other examples, the adjustment may be applied only to the next layer or to all layers of the same level. An operator may provide an input, via the interface device 260 as to how the adjustment is to be applied. In other instances, the processor 204 applies the adjustment to all subsequent layers unless a subsequent level or layer has a different structural feature at a location at or adjacent to where the adjustment occurred.

As shown in Fig. 5, different layers are part of different levels. For example, instructions 253al to 253an correspond to layers of a first (print) level while instructions 253b1 to 253bn correspond to layers of a second (print) level. As disclosed herein layers of a same level have the same instructions (except for a specified height). In the illustrated example, the first level may correspond to lower wall height while the second level may correspond to a mid-wall height that includes window frames and/or recessed areas for shelving. The use of levels enables the processor 204 to organize the layers into groups during generation and/or for making adjustments. In other embodiments, the data structure 280 may omit levels.

In some embodiments, the processor 204 is configured to generate significantly more instructions 253 than layers to be printed. The instructions 253 may specify a height of 0.10 or 0.05 of an inch rather than a more typical 0.5 or 1 inch. In other words, the instructions 253 are provided at a higher resolution than is capable of being extruded by the printer assembly 100. During printing, the processor 204 may have five to fifteen instructions 253 available to select for a subsequent layer. The processor 204 may select an instruction 253 that most closely matches the previous instruction. The match may be made by comparing, for example toolpath distances and locations of turns. If adjustments are made to the subsequent instruction, the processor 204 may be configured to perform the comparison taking into account the adjustment.

Additionally or alternatively, the processor 204 is configured to perform a transformation and/or interpolation between layers. For example, to print certain wall features, such as a curve, the processor 204 may perform an interpolation between instructions 253 to ensure a curvature between layers is smooth and/or consistent. In another example, the instructions 253 may specify the printer assembly 100 movement based on a randomization function or other transformation. The processor 204 is configured to smooth, with a filter or via comparison, the randomization to provide a more flowing or less abrupt changes between layers (as specified by the corresponding instructions 253) to achieve a desired aesthetic appearance.

### Three-Dimensional Printing Adjustment Embodiment

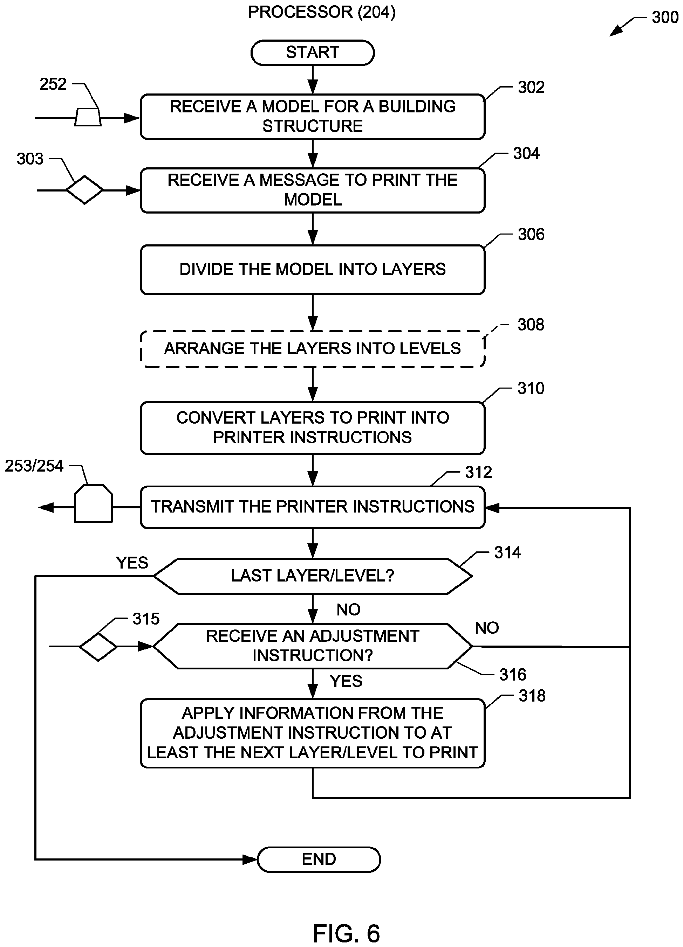

Fig. 6 is a flow diagram of an example procedure 300 to apply adjustments in real-time or near real-time to subsequent printer instructions during three-dimensional printing of a structure, according to an example embodiment of the present disclosure. Although the procedure 300 is described with reference to the flow diagram illustrated in Fig. 6, it should be appreciated that many other methods of performing the steps associated with the procedure 300 may be used. For example, the order of many of the blocks may be changed, certain blocks may be combined with other blocks, and many of the blocks described may be optional. In an embodiment, the number of blocks may be changed based on whether interpolation or a transformation is applied to one or more instructions 253. The actions described in the procedure 300 are specified by one or more software instructions stored in the memory 205, and may be performed among multiple devices including, for example the processor 204 of the controller 209 and/or the interface device 260.

The example procedure 300 begins when the processor 204 of the controller 209 receives a model file 252 for a building or other architectural structure (block 302). The model file 252 may be received from a CAD program and/or input via the interface device 260. The processor 204 next receives a message 303 to print a structure specified by the model file (block 304). The message 303 may be received via the application 262 of the interface device 260.

After receiving the message 303, the processor 204 partitions or slices the three-dimensional model specified by the model file 252 into two-dimensional cross sections (e.g., layers) at different heights (block 306). In some embodiments, each cross-section may have a height between 0.25 inches and 2 inches based on a thread height of the concrete to be printed. In some embodiments, the processor 204 may slice the three-dimensional model into many different cross-sections to provide greater resolution.

In embodiments where levels are used, the processor 204 arranges or groups the two-dimensional cross-sections by level (block 308). As discussed above in connection with Fig. 5, the processor 204 stores cross-sections having similar toolpaths to the same level. The processor 204 then converts the cross-sectional layers into printer-readable instructions 253 (block 310). In some embodiments, the processor 204 may organize cross-sections by level after the conversion to printer instructions.

To convert two-dimensional cross-sections into printer instructions, the processor 204 is configured to operate an optimization routine that determines a toolpath that provides for a continuous or near-continuous extrusion of concrete. The routine identifies a start point and an end point that are located at window headers, door headers, or other locations where seams can be hidden. The routine also identifies movement of the gantry 50 along the axes 12 and 14 such that all identified structural features are traced without any backtracking or thread bridging. The routine may also determine wall infill dimensions to provide appropriate structural support. The processor 204 converts the determined toolpath and the related printing parameters into printer-readable instructions (e.g., G-code).

The example procedure 300 of Fig. 6 continues when the processor 204 stores the instructions 253 to the memory 205 and transmits a first (or next) instruction 253 (or driver signal 254) to the three-dimensional printing system 10 for printing (block 312). After the layer corresponding to the transmitted instruction (or driver signal) has finished printing (as determined by the processor 204 via feedback from the three-dimensional printing system 10), the processor 204 determines if there is a next layer or level (block 314). If there are no remaining layers or levels to print (e.g., the instruction 253 corresponding to the greatest height has been executed), the processor 204 determines that the structure has been printed and the procedure 300 ends.

However, if there is a next layer or level, the processor 204 determines if information 315 indicative of an adjustment to the previous layer has been received (block 316). As discussed above, in connection with Figs. 4 and 5, the information 315 may include control data indicative of manual movement of the gantry 50 and/or the printer assembly 100. For example, the information 315 may specify gantry movement along the axes 12 and 14 over a defined distance. The information 315 may additionally or alternatively include coordinates and vectors that are indicative of manual movement of the gantry 50. The information 315 may be received from the application 262 of the interface device 260. The information 315 may also be received from controls (and/or motor drivers) on the three-dimensional printing system 10.

If there is no information 315 indicative of an adjustment, the processor 204 returns to block 312 and selects the next printer instruction 253 (or driver signal 254) for transmitting to the three-dimensional printing system 10. If there is information 315 indicative of an adjustment, the processor 204 applies the adjustment to at least the next instruction 253 (block 318). The processor 204 applies the adjustment by identifying a location in a specified toolpath where the adjustment occurred. The processor 204 then adjusts toolpath direction and/or distance based on the adjustment. For example, the processor 204 may extend a toolpath and/or change a direction along the axes 12 and 14 in which the gantry 50 is to be moved. After the adjustment is applied, the processor 204 returns to block 312 and selects the next printer instruction 253 (or driver signal 254) for transmitting to the three-dimensional printing system 10.

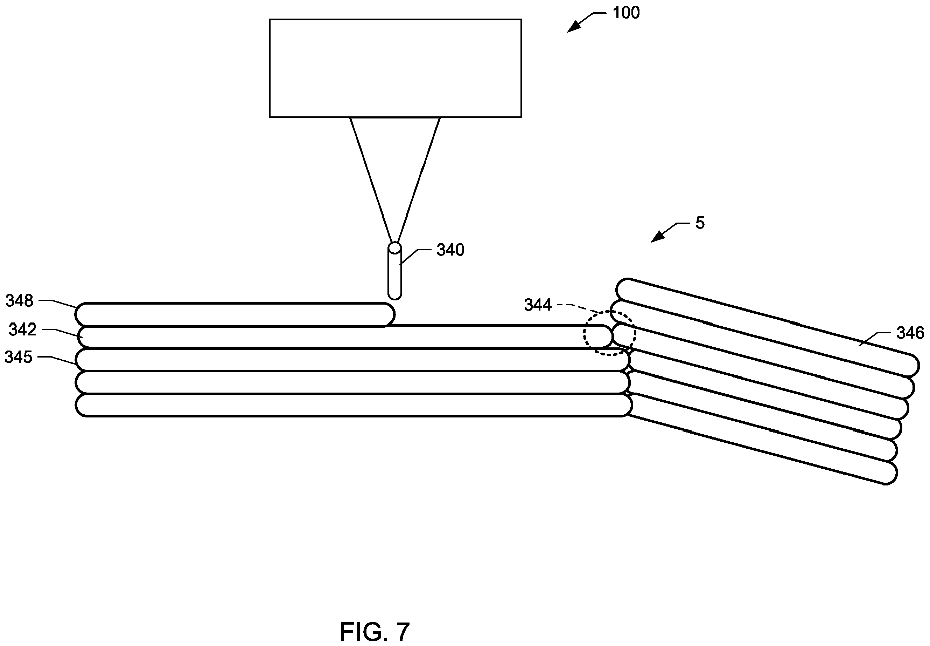

Fig. 7 is a diagram that is illustrative of adjustments applied in real-time between printings of subsequent layers of a structure 5, according to an example embodiment of the present disclosure. As shown in Fig. 7, a printer assembly 100 of the three-dimensional printing system 10 printed layer 342 (e.g., a concrete thread). At location 344, an operator determined that the layer 342 is to have a shorter length than a previous layer 345 due to an extension of an adjacent wall or other structure 346. This error may have resulted from an artifact from the model file 25, an improper translation of the model file 252 to the instructions 253, or a result of a design error. Regardless, the operator manually caused the printer assembly 100 stop printing at the location 344 when the wall or structure 346 was reached.

In this embodiment, the processor 204 receives information 315 indicative that the toolpath did not fully extend into the corner but stopped four inches short. Before a next layer 348 is printed, the processor 204 adjusts an instruction 253 for the next layer 348 by shortening the toolpath in a similar manner. Accordingly, the adjusted instruction 253 will cause the printer assembly 100 to stop four inches shorter at the location 344 to accommodate the extension of the wall or structure 346. The processor 204 may apply the adjustment to subsequent layers that are part of the same level or for all subsequent levels that include layers that are to be printed into the same corner of the structure 5. As one can appreciate, the example processor 204 applies manual changes to the three-dimensional printing of the structure 5 in real-time without having to edit the original model file 252 or re-slice two-dimensional cross sections, thereby saving construction time.

Returning to Fig. 6, the example procedure 300 continues until all layers and/or levels have been printed. In some embodiments, the processor 204 may add one or more layers to a level to compensate for height loss during printing. For example, with concrete, 1/2 inch of height is lost for every 12 inches of printed concrete. Thus, for a 24 inch level, the processor 204 is configured to add at least two additional layers by copying the instruction 253 for the original last layer of the level. The processor 204 accordingly automatically ensures levels reach a specified height of a building. The example procedure 300 ends after the structure 5 has been printed.

### Model File and Build Plan Generation Embodiment

As discussed above, a model file 252 may be used for creating printer instructions to enable three-dimensional printing of a structure. Alternatively, as discussed below, the printer instructions may be generated from a build plan. The model file 252 is a relatively complex three-dimensional rendering of a structure that specifies in detail where certain structure features are to be located including walls, windows, doors, wall recessed sections, ceiling support sections, etc. The model file 252 also defines room dimensions, wall curvature, and other building aesthetic features that can be printed using concrete.

Typically, most model files are relatively time consuming to create. Typically, an architect or a construction project manager has to create a model file based on discussions with the owner of the structure to be created. Oftentimes, model files are not created for smaller residential and commercial structures because the effort is not worth it to a builder. However, model files are still required for three-dimensional printing, even for smaller structures. As a result, the time to manually create a model file may significantly impact the cost for printing smaller residential and commercial structures.

The systems, methods, and apparatus disclosed herein overcome at least some of the issues regarding model file creation by automatically generating model files from structural templates (e.g., build planning functions) that are configured to receive modifications from an owner or a builder. Potential design choices are designed into the build planning functions, which enable an owner or builder to customize a structure by, for example, adding rooms, modifying door and window openings, changing a scale of various structural features, etc. The build planning functions are also configured to accept different site/location requirements and/or code requirements. This design flexibility enables model files to be created and reused across multiple jurisdictional locations and climatic zones. The example systems, methods, and apparatus, are configured to use algorithms or routines that generate a build plan from a build planning function, which takes into consideration local building codes, structural loads, and thermal attributes of the building environment. The systems, methods, and apparatus disclosed herein generate a model file based on the build plan to enable three-dimensional printing of the structure.

It should be appreciated that with the generative framework, thousands of unique building plans can be created from just a few dozen abstract architectural models (e.g., build planning functions). The generated model file not only provides instructions for printing. The model file may also include building requirements and directions for use by operators and construction personnel at a build site. The disclosed process provides a full audit trail of actions taken during the model file creation process and the build process.

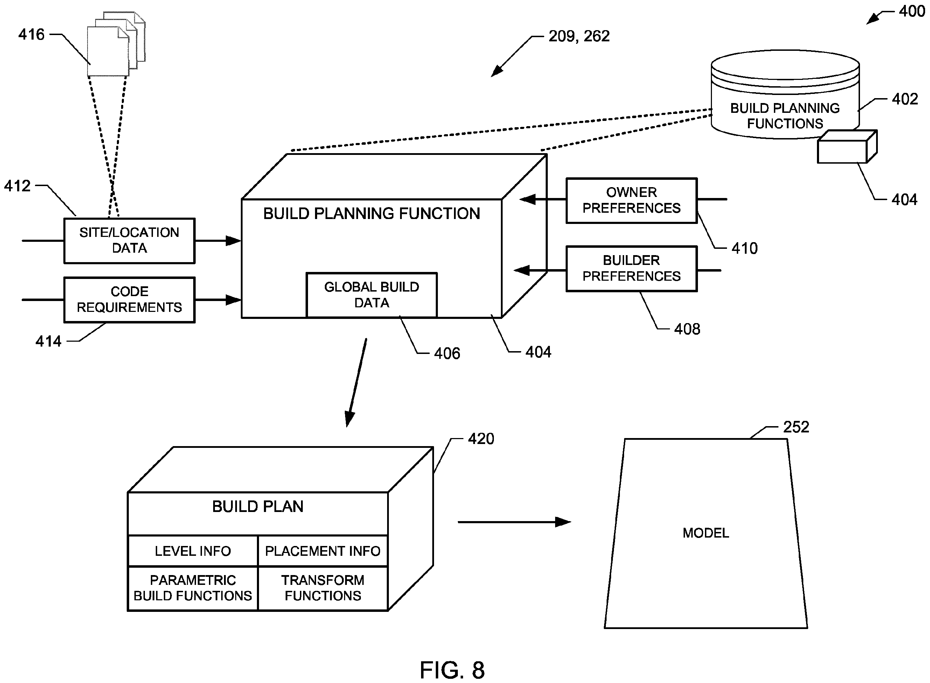

Fig. 8 is a diagram that shows a system 400 for using build planning functions to create a building plan, which is used for creating a model file 252 for three-dimensionally printing a structure, according to an example embodiment of the present disclosure. In the illustrated example, a memory device 402 is configured to store a plurality of build planning functions 404. As disclosed herein, each build planning function 404 is a template for creating a different type of architectural structure. Different build planning functions may exist for a single story residential structure, a multi-store residential structure, a multi-unit residential structure, a single story commercial structure, a multi-story commercial structure, a government structure, a garage, a storage shed, a warehouse, utility lines, a wall, a tunnel, a launch pad, furniture, a landscaping element, or any other structure that can be formed via printed concrete.

As shown in Fig. 8, each build planning function 404 includes global build data 406 that comprises one or more rules for constructing the respective structure. The rules may specify requirements for wall loading, minimum room dimensions, allowable window/door openings, wall thicknesses, etc. The rules may also include, for example, at least one of standard international building code data, climate zone data, historical weather, data, or seismic zone data. The data is available for selection based on inputs from an owner and/or builder and are applied once selected. For example, selection of a seismic zone changes certain rules about structure stability to ensure a printed structure is able to withstand seismic activity.

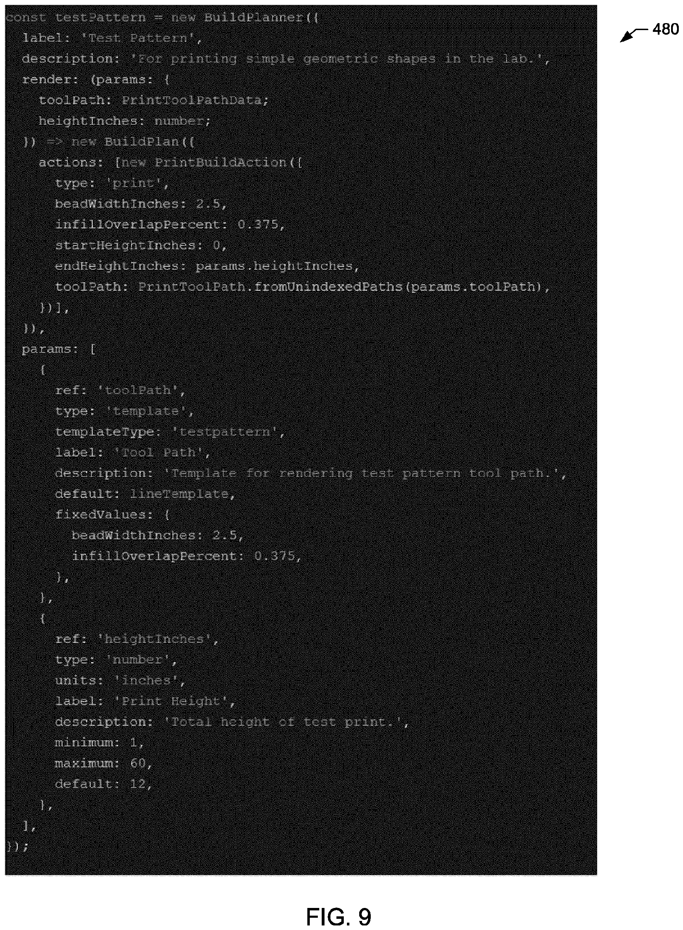

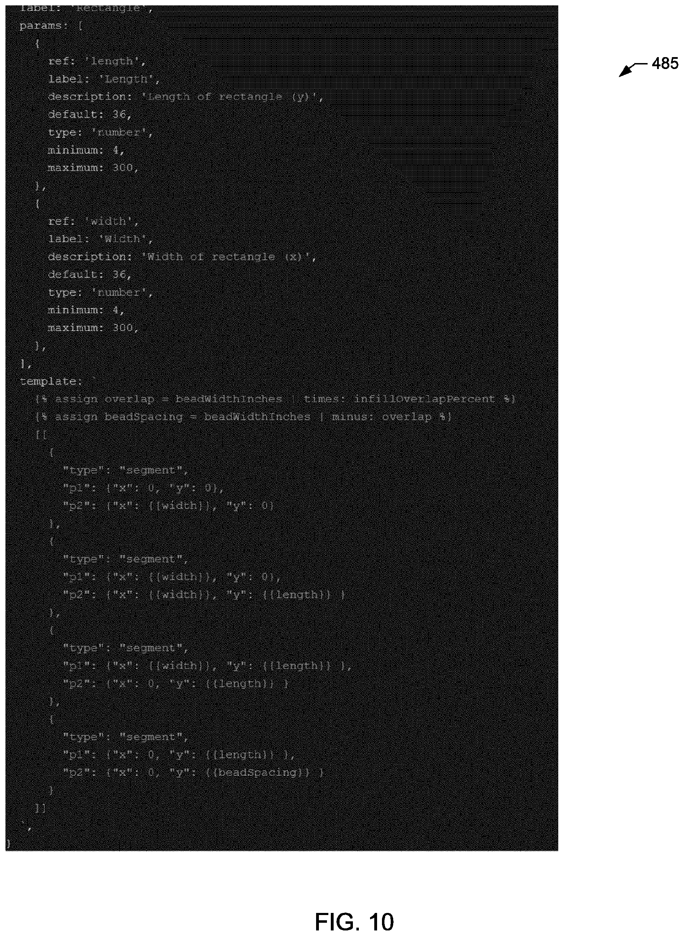

Figs. 9 and 10 are diagrams of software code for different build planning functions 404, according to example embodiments of the present disclosure. Fig. 9 shows a build plan 480 that includes a build planning function labelled "testpattern". The testpattern build planning function includes variables (e.g., parameters) for creating a straight line toolpath, which may be used to create a wall. The variables specify a bead width, an infill percentage, a wall height, and a wall length. A builder or owner may change any of the variables provided within the testpattern build planning function to create a desired wall.

Fig. 10 shows a build plan 485 that includes a build planning function labelled "rectangle". The rectangle build planning function includes variables for creating a rectangle toolpath, which may be used to create a room or rectangular structure. The variables specify a length of each segment of the rectangle, a bead width, an infill percentage, and a height. A builder or owner may change any of the variables provided within the rectangle build planning function to create a desired room or other rectangular structure. In some embodiments, the rectangle build planning function may include variables to enable a user to select multiple rooms, and accordingly define dimensions for each room and a connectivity feature (e.g., a door) between the rooms.

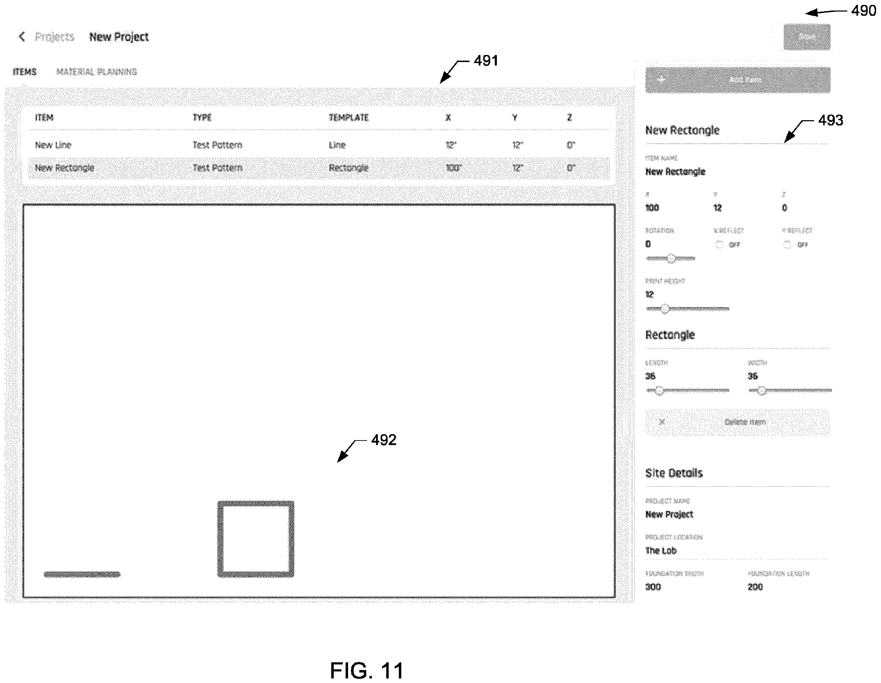

Fig. 11 is a diagram of a graphical user interface 490 that may be displayed by the interface device 260 via the application 262 for populating variables/parameters of the rectangle build planning function of Fig. 10, according to an example embodiment of the present disclosure. In the illustrated example, a summary section 491 indicates that a line build planning function and a rectangle build planning function have been created as part of a project. A preview section 492 shows a graphical illustration of the line and rectangle designs specified by a user using the respective line and rectangle build planning functions. As one can appreciate, multiple build planning functions may be combined together into one project to create a more complex structure.

The user interface 490 also includes a variable (parameter) section 493, which shows variables of the rectangle plan function that may be edited by a user. The variable section 493 includes variables for x, y, and z coordinates of the rectangle, an angle of rotation, a printing height, a length, a width, and cite details. In some instances, the cite details may include inputs for global build data including climatic information, seismic information, building code information, etc. For example, selection of a cold weather input may increase a minimum wall thickness to accommodate the inclusion of insulation in an infill region.

The example user interface 490 provides a graphical representation of the build planning functions, which enable relatively easy modification by a builder or an owner. The user interface 490 also enables a builder or other user to enter site specific information that impacts certain minimum (or maximum) thresholds for the structure. Returning to Fig. 8, the entry of information for the variables includes builder preferences information 408, owner preferences information 410, site/location specific data 412, and/or code requirements 414. Prompts for this information 408 to 414 are defined by the global build data 406 and populated for entry on the user interface 490. In some instances, the site/location data 412 may be retrieved from a third-party server 416, such as a server of a survey or geological engineering company.

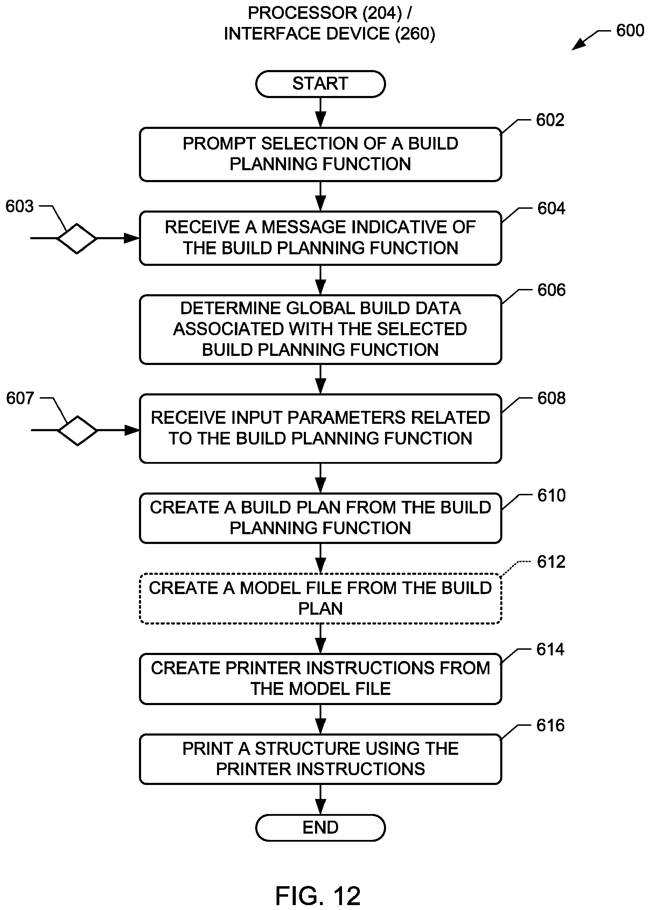

Fig. 8 shows that the build planning function 404 may be executed in an application (e.g., the application 262) operating on the interface device 260 or on the controller 209. Fig. 12 is a flow diagram of an example procedure 600 for creating a model file 252 for three-dimensional printing of a structure, according to an example embodiment of the present disclosure. Although the procedure 600 is described with reference to the flow diagram illustrated in Fig. 12, it should be appreciated that many other methods of performing the steps associated with the procedure 600 may be used. For example, the order of many of the blocks may be changed, certain blocks may be combined with other blocks, and many of the blocks described may be optional. In an embodiment, the number of blocks may be changed based on the selected build planning function. The actions described in the procedure 600 are specified by one or more software instructions stored in the memory device 402, and may be performed among multiple devices including, for example the processor 204 of the controller 209 and/or the interface device 260.

The example procedure 600 begins when the processor 204 and/or the interface device 260 display a prompt for a user to select a build planning function 404 (block 602). The device 260 or the controller 209 may provide a prompt that lists all available build planning functions 404 (e.g., templates) for selection. In the example, the interface device 260 or the controller 209 receives a message 603 that is indicative of a selection of a build planning function 404 from among a plurality of build planning functions stored in the memory device 402 (block 604). The processor 204 and/or the interface device 260 then determine global build data that corresponds to the selected build planning function 404 (block 606). Further, the processor 204 and/or the interface device 260 prompt or otherwise receive input parameter values 607 that are related to the build planning function 404 and/or the global build data (block 608).

As shown in Fig. 8, each build planning function 404 defines variable parameters (e.g., global build data) and/or logic, algorithms, and equations needed to generate a build plan 420. The logic, algorithms, and equations of the build planning function specify available input parameters and global build data 406 for selection. For example, a build planning function 404 to create a launch pad may include input parameters for load requirements of rockets that will launch from the pad. In another example, a build planning function 404 to create a picnic table may include input parameters for a desired length and width of the table top.

In some embodiments, the build planning functions 404 comprise dynamic template parameters that include a data structure of acceptable parameter value ranges with a specification or template-specific parameters. The dynamic template parameters may be part of a data structure that complies with an interface required by one or more build planning functions 404, where some of the data in the interface is represented as a variable reference instead of an actual value. To generate the actual desired input data in the specified interface of the processor 204 and/or the interface device 260, the build planning function 404 may first apply a set of template parameters to the template, replacing variable references with the parameter data supplied by a user or via user selection of other variable parameters. Template specification types can exist independently of the build planning functions 404. Specifications could be defined for residential homes, dome-based abstract structures, types of furniture (e.g. a picnic table, a chair, etc.), launch pads, archways, etc. The specifications can then be used by one or more build planning functions 404, thereby enabling a shared library of a specific type of template (e.g., floor plans) to be provided as a pool of available choices for more than one build planning function 404.

In an example for a residential home, there may exist one or more build planning functions 404 designed to output build plans for residential homes. One way those build planning functions 404 could accommodate multiple floor plans would be to specify one or more "floor plans" for one-story residential homes and two-story homes, which may require a "floor plan" dynamic template parameter. Valid inputs to satisfy this requirement may include a floor plan template with optional variable references for parameters needed, and a set of parameter data required to replace those variable references. The floor plan templates could exist in a library of available floor plans in the memory device 402. In this manner, a build plan 420 for a home could be generated by supplying one of the build planning functions 404 that is configured to output a build plan 420 from a floor plan template with the selected floor plan template and the parameter selections required to populate the template.

As shown in Fig. 12, the processor 204 and/or the interface device 260 creates a build plan 420 from the build planning function 404 including the global build data and input parameters (block 610). In some embodiments, a model file 252 is created from the build plan 420 (block 612). As discussed in connection with Figs. 3 to 7, printer instructions 253 may be created from the model file 252 (block 614). In other embodiments, the printer instructions 253 may be created directly from the build plan 420. The processor 204 and/or the interface device 260 uses the printer instructions 253 to three-dimensionally print a structure (block 616). The example procedure 600 ends after the structure has been printed according to the build plan 420.

Returning to Fig. 8, a build plan 420 includes a data object that contains instructions needed to build an object or a structure. Build plans 420 may include printer instructions 253 (e.g., G-code) and/or human instructions (e.g., trim carpentry details), thereby encompassing all construction elements, not just those that are automated. Build plans 420 may also include a model file 252 that can be used to analyze building attributes and performance for three-dimensionally rendering the structure. Further, the build plans 420 may include data for calculating a complete inventory of materials and tools needed for each step of construction. As shown in Fig. 8, the build plan 420 includes level information, parametric build functions, placement information, and transform functions.

A build plan 420 includes a list of actions, each of which has a placement specification. Placements of type "once" corresponds to actions that need to happen one time, at a specified height (with allowed tolerance for placing above/below a specified height), with optional XY coordinates or a vector path on the XY plane where the action is to occur. Placements of type "level" correspond to actions that occur continuously from one height to another. The level information is described in more detail in connection to Fig. 5. Parametric build actions do not provide a height specification or range, but instead provide a function that accepts a Z (height) value and outputs an appropriate action at that height. This action enables continuous morphing of actions with a varying vertical distance from one application of the action to the next. For example, a printed layer may vary from 0.8-1.0 inches in height, as specified by a parametric build action of a build plan 420.

Build actions may further include a transform function to enable variation based on X, Y, and Z coordinates along the axes 12, 14, and 16 of Figs. 1 and 2. The function maps from XYZ to XYZ, effectively warping three-dimensional space. This function mapping enables, for example, a toolpath designed to generate a flat vertical wall to be transformed into a rippling two-dimensional sine wave plane. Transform functions may also accept input from dynamically changing real-time variables, such as a timestamp when the action is performed, live data from Internet feeds, or locally-connected sensors. This enables printing actions to vary dynamically as they are being performed or executed by the controller 209 of the three-dimensional printing system 10, thereby creating a unique output that is a product of the real-time data available while the object or structure is built.

### Printer Instruction Generation from a Build Plan or Model File Embodiment

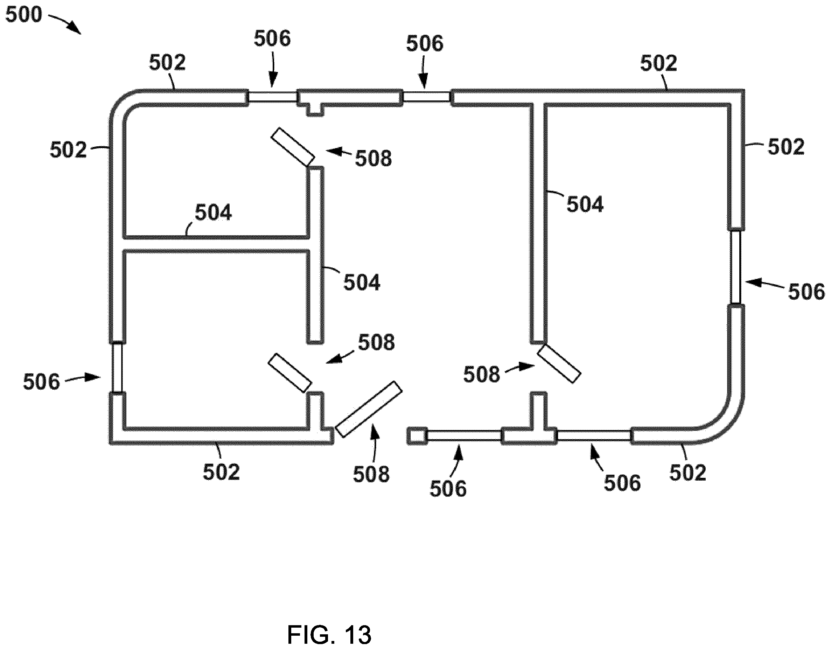

As disclosed above, a build plan 420 and/or a model file 252 may be used to generate printer instructions 253. Figs. 13 to 26 are diagrams illustrative of an example process for converting a build plan 420 and/or a model file 252 into printer instructions, according to an example embodiment of the present disclosure. The process may be carried out by the controller 209 and/or the application 262 of the interface device 260.

Referring to Fig. 13, a floor plan of a structure 500 that may be designed and constructed according to some embodiments is shown. In this embodiment, the structure 500 is a single-story structure. However, multi-story structures (e.g., such as a two-story or a three-story structure) may also be constructed via the system, apparatus, and methods described herein. The structure 500 includes a plurality of walls including a plurality of exterior walls 502 and a plurality of interior walls 504. In addition, the structure 500 includes a plurality of windows 506 extending through the exterior walls 502, and a plurality of door frames 508 extending through both the exterior walls 502 and the interior walls 504.

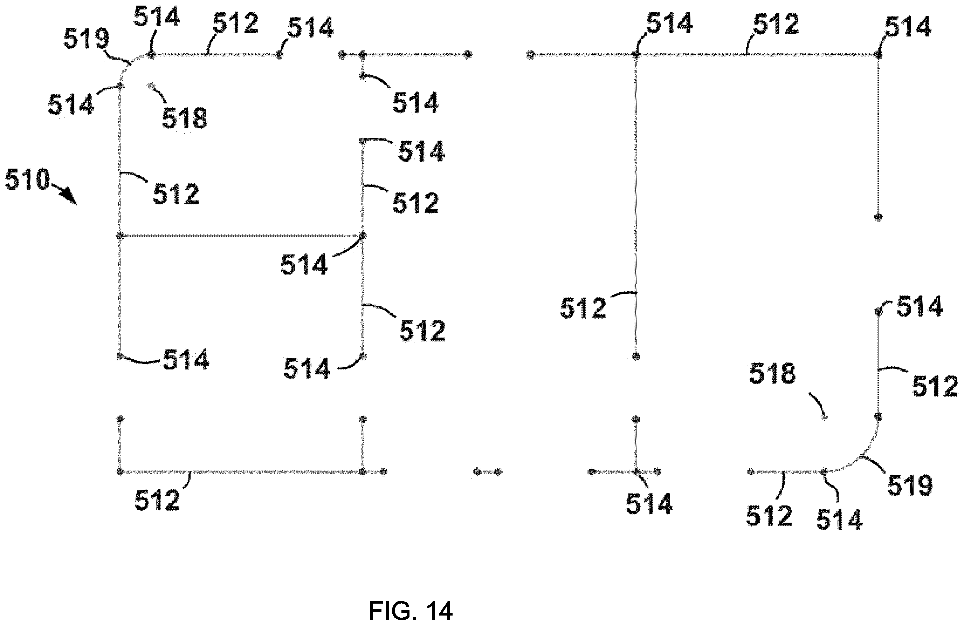

Referring to Figs. 13 and 14, once the floor plan of the structure 500 is finalized (e.g., such as the floor plan shown in Fig. 13), the floor plan, including the walls 502, 504, the windows 506, and the door frames 508 is reduced down to a line diagram 510 including a series of line segments representing the general layout of the structure 500. Specifically, within the line diagram 510 of Fig. 14, each of the walls 502, 504 are represented by a series of line segments 512 extending between discrete points 514, and each of the windows 506, 508 are represented by gaps 516 between pairs of points 514 from different line segments 512. Within the line diagram 510, points 514 are positioned both at the ends of the line segments 512 and at points of intersection between two or more line segments 512.

Additionally in this embodiment, the structure 500 includes a plurality of curved walls (e.g., such as two of the exterior walls 502 on the structure 500). To represent these curved walls within the line diagram 510, the straight portions of the walls 502 are drawn as straight line segments that end in points 514 situated at the start of the curved section or portion. Next, a focal point 518 is fixed to thereby define the radius of curvature for the curved section of the wall 502, and a curved line segment 519 is drawn along that defined curvature between the two points 514 of the adjoining straight wall portions (which are represented by line segments 512 as previously described). As a result, the line diagram 510 represents a curved wall segment as a discrete curved line segment 519 (with a designated focal point or center of curvature 518) that joins or intersects with two adjoining straight line segments 512 at a pair of points 514, which thereby simplifies the geometric representation of the relatively complex curved portions of the exterior walls 502 of the structure 500.

Without being limited to this or any other embodiment, by first defining a line diagram 510 to define the wall segments, window, doors, etc. of the structure 500, the nominal placement (e.g., the centerline placement) and length of each of the walls, windows, doors, etc. of the structure 500 may be defined. In some embodiments, the line diagram 510 is derived (e.g., wholly or partially) by the controller 209 and/or the interface device 260. As a result, the variables, including the length of walls, the starting and ending points of walls, the curvature (for curved wall portions) of the walls, the wall centerline location, the points of intersection between walls, etc. that are determined from the line diagram 510 may be captured and stored by the controller 209 and/or the interface device 260 in the memory 402 of Fig. 8. Thereafter, this data may be utilized in generating subsequent diagrams and plans in the manner described herein. In addition, in some embodiments, a multiple story structure may be represented by a plurality of line diagrams (e.g., like the line diagram 510), where each story or level of the structure may have its own corresponding line diagram. In addition, in some embodiments, multiple line diagrams 510 may be generated for a given story of a structure (e.g., so as to represent different vertical sections or levels of the given story).

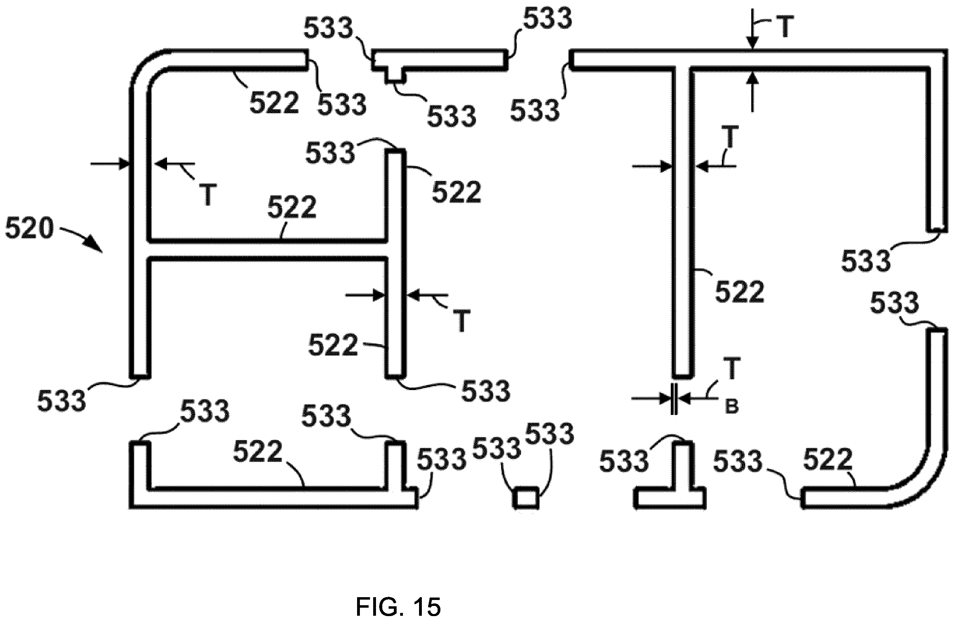

Referring now to Figs. 13 to 15, after the line diagram 510 (and the variable and data associated therewith) is derived for the structure 500 as previously described above, a 520 shell diagram is generated for each of the walls 502, 504 based on the positioning and length information provided by the line diagram 510. Generally, to generate the shell diagram 520, each line segment from the line diagram 510 (e.g., line segments 512, 514 in Fig. 14) is given a wall thickness or width. In some embodiments, the wall thickness T may be represented as a distance extending perpendicular and equidistantly on each side of the line segments from the line diagram 510. The resulting shell diagram 520 in Fig. 15 shows the outer shell or borders 522 of the walls 502, 504 of the structure 500. In this embodiment, the shell diagram 520 is derived by showing all of the windows 506 and door frames 508 open. The portions of borders 522 that form the inner edges of door frames 508 and windows 506 are referred to herein as end-cap ribs 533. As will be described in more detail below, the end-cap ribs 533 may not be present within all of the vertical sections or levels of the structure 500 (e.g., such as at the top of a window or door frame where a structural header may be placed). In addition, as described in more detail below, some portions of the structure 500 may include wall segments that are closed proximate to the windows 506 and/or door frames 508 (e.g., such as vertical sections of structure that are above or below a window 506 or above a door frame 508).

Referring still to Figs. 13 to 15, within the shell diagram 520, a single enclosed border 522 is designated for connected or intersecting walls. In addition, in this embodiment, the thickness T of each wall (e.g., the walls 502, 504) of the structure 500 is the same. However, in other embodiments, the thickness T of the walls within a given structure may be varied. In these embodiments, the differences in thickness T for the various walls of the structure may be defined within the shell diagram 520. Further, within shell diagram 520, a bead thickness *T_{B}* may be defined for the lines forming the borders 522. The bead thickness *T_{B}* may be determined by the thickness or width of the bead of extrudable building material that is extruded by the three-dimensional printing system 10 disclosed herein. Because the bead thickness *T_{B}* influences the relative placement of the lines forming the borders 522 to provide the desired wall thickness T, it is represented and included within the shell diagram 520. In some embodiments, the bead thickness *T_{B}* is a function of the printer assembly 100 (e.g., the size and shape of outlet of outflow conduit previously described), and may either be a fixed or a ranged variable.

As a result of the shell diagram 520, the foot print and perimeter of the structure 500 is defined. In addition, the width of the windows 506 and door frames 508 is also defined along with the internal area (e.g., square footage) of the structure 500 and any rooms defined therein. In some embodiments, the shell diagram 520 may be derived (e.g., wholly or partially) by the controller 209 and/or the interface device 260. In addition, a multi-story structure may be represented by a plurality of shell diagrams (e.g., like the shell diagram 520), where each story or level of the structure may have its own corresponding shell diagram. In addition, in some embodiments, multiple shell diagrams 520 may be generated for a given story of a structure (e.g., so as to represent different vertical sections or levels of the given story).

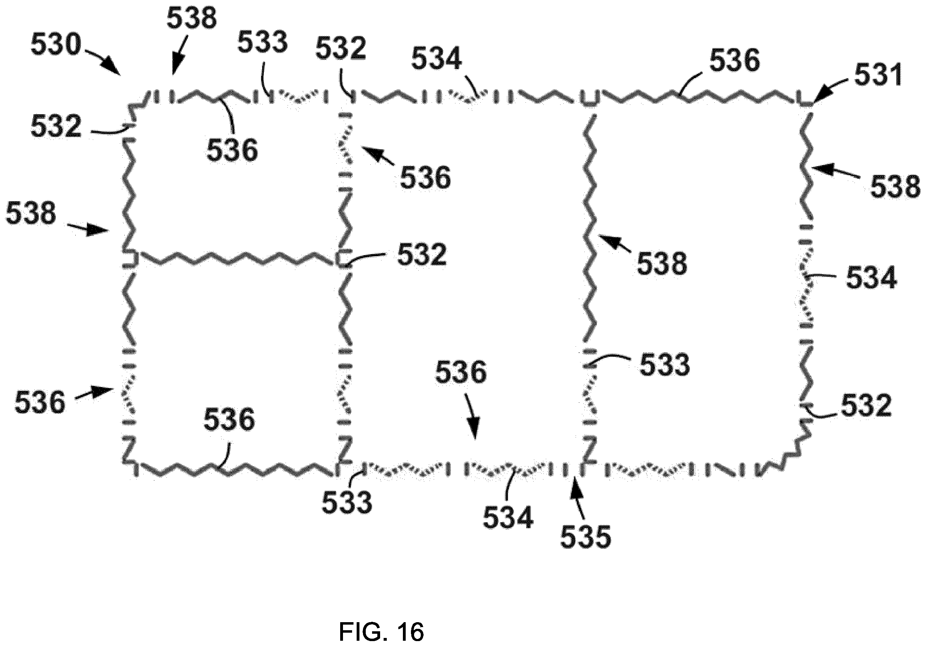

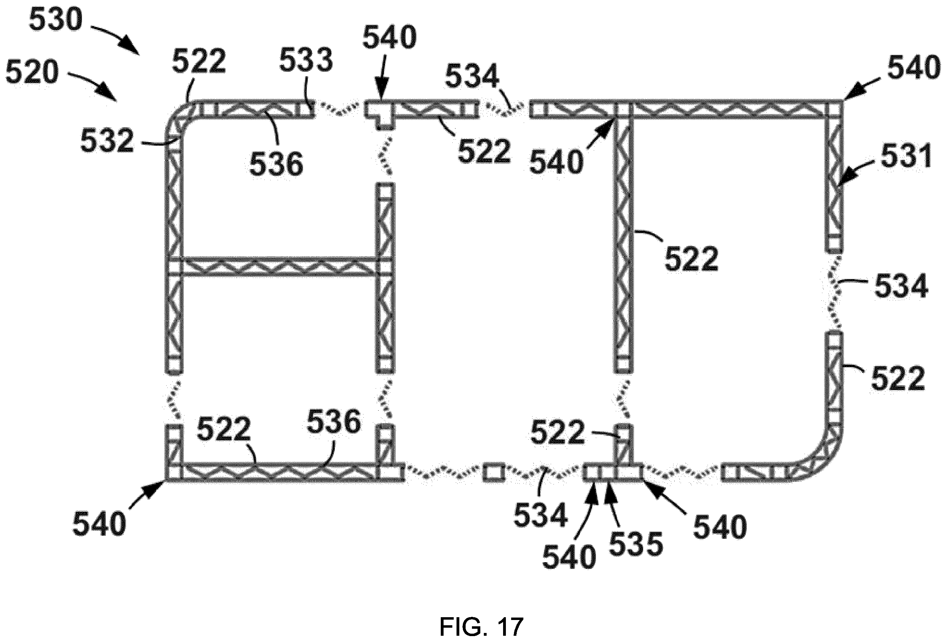

Referring now to Figs. 13, 16, and 17, once the outer borders 522 of the walls forming the structure 500 are defined by the shell diagram 520, an infill 531 for partially or wholly filling the space defined within borders 522 is defined within an infill diagram 530. Fig. 16 shows the infill diagram 530 of the structure 500, and Fig. 17 shows the infill diagram 530 superimposed atop the shell diagram 520 of Fig. 15 to better illustrate the features and function of the infill defined by the diagram 530.

The infill 531 generated within the infill diagram 530 may comprise a plurality of ribs 532 that extend perpendicularly between opposing sides (or walls) of the border 522, and a plurality of lattice lines 534 (or more simply lattice 534) extending within the borders 522 along the walls (e.g., along the directions of the line segments from line diagram 510) between ribs 532 and/or end cap ribs 533. While end-cap ribs 533 are formed as portions of the border 522 as previously described, the end cap ribs 533 are represented in the infill diagram of Fig. 16 so as to show their position with respect to the infill 531. The ribs 532 are disposed proximate each of the points 514 within line diagram 510 (see Fig. 14) and define a plurality of cores 540. Thus, the cores 540 may be generally disposed at the lateral edges of the door frames 508 and the windows 506 and at the intersection of the walls 502, 504 within the structure 500. Accordingly, the cores 540 that are formed at the edges or the windows 506 or the door frames 508 will include at least one end-cap rib 533, and at least one rib 532.

The cores 540 (which are defined by the ribs 532 and portions of the border 522, including the end-cap ribs 533 as previously described) may be substantially hollow regions within the walls 502, 504 that are formed by a plurality of vertically aligned ribs 532, and the borders 522 (including the end cap ribs 533) during the construction of the structure 500. In some embodiments, following the construction (e.g., printing) of the structure 500, the completed cores 540 are filled with a plurality of elongate steel members (e.g., rebar), insulation, and/or a cement mixture. Without being limited to this or any other embodiment, the filled cores 540 may serve as vertical support columns within the structure 500, thereby enhancing the structural integrity of the structure 500.

In this embodiment, if two or more cores 540 are immediately adjacent one another within a wall or combined wall border 522, as depicted within the shell diagram 520, the two or more cores 540 may be merged into a single core 540. In some embodiments, if two or more cores 540 would be disposed within a certain distance X, which may be 1-10 inches along a given wall (e.g., the wall 502, 504) in some embodiments, the two or more cores 540 are merged into a single core 540. For example, the cores 540 that would be disposed at the intersection of multiple walls 502, 504 are merged into a single core 540. As another example, the cores 540 that are to be disposed at the ends of a relative short wall segment may be merged (e.g., if the distance between the two cores 540 is within distance X, as previously described).

In this embodiment, the cores 540 are generally polygonal in shape. However, other non-polygonal shapes may be utilized in other embodiments. More specifically, many of the cores 540 within the structure 500 may be rectangular and thus are defined by two ribs (e.g., either the ribs 532 or a combination of the ribs 532 and the end cap ribs 533) and some portion of the corresponding border 522 (e.g., other than end-cap ribs 533). Additionally, some of the cores 540, such as merged cores 540 at the intersection of multiple walls 502, 504 may be formed by more than two ribs 532, 533 in addition to the portions of the corresponding border 522 (again other than end-cap ribs 533).

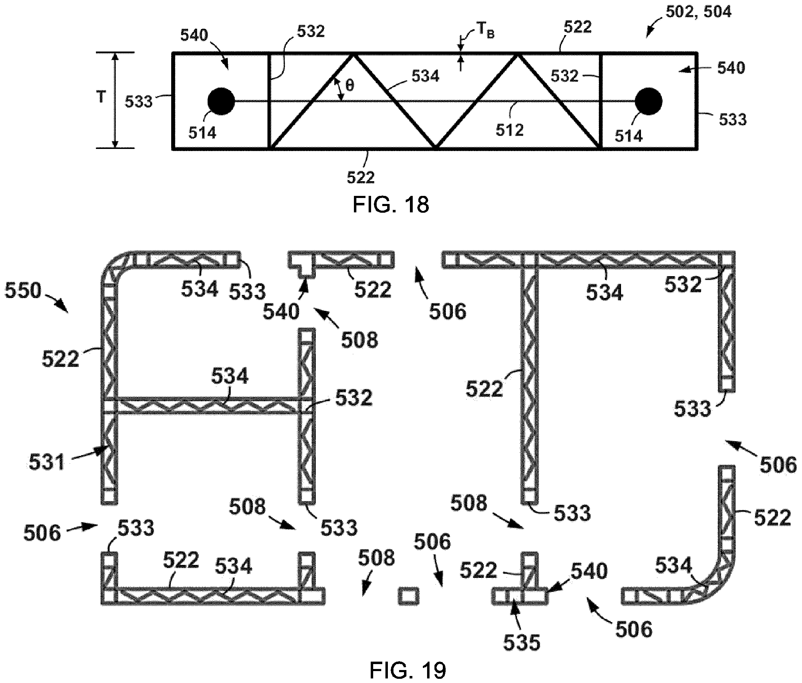

Referring still to Figs. 13, 16, and 17, a lattice 534 may extend between the cores 540 along the corresponding wall 502, 504 (e.g., along the line segments 512 defined within the line diagram 510, as shown in Fig. 14). Referring briefly to Fig. 18, the lattice 534 may extend in a zig-zag pattern between the opposing borders 522 of the corresponding wall 502, 504 at an angle *θ* relative to the corresponding line segment 512 associated with the corresponding wall 502, 504. The angle *θ* may depend on a number of different factors, such as, for example, the length along the corresponding wall (e.g., the wall 502, 504) between the ribs 532, 533, the thickness *T* of the wall, the bead thickness *T_{B},* etc. In some embodiments, the angle *θ* may range from approximately 20° to approximately 45°.

Referring again to Figs. 13, 16, and 17, in some embodiments, the length of a wall segment between the two ribs 532, 533 may not be suitable (e.g., may not be long enough) for the placement of lattice 534. As result, the lattice 534 may be omitted within the particular wall segment, therefore forming a void 535 (see void 535 shown in Fig. 17). In this embodiment, the lattice 534 may be omitted within a given wall segment (thereby forming a void 535) when the distance between the two adjacent cores 540 within the corresponding wall segment is within a predetermined threshold limit (e.g., such as approximately 0 to 6 inches).

As shown in Figs. 16 and 17, the infill diagram 530 may further define a first subset of the infill 531 that is referred to as a variable infill 536 and a second subset of the infill 531 that is referred to as a fixed or invariable infill 538. As described in more detail below, the fixed infill 538 may be present at all vertical levels of the structure 500, while the variable infill 536 may be present within less than all of the vertical levels of the structure 500. Typically, the variable infill 536 is associated with windows (e.g., the windows 506) and doors frames (e.g., the door frames 508) extending through the walls (e.g., the walls 502, 504) of the structure (e.g., the structure 500, which create discontinuities within the walls when moving vertically therealong). In Figs. 18 and 19, the variable infill 536 is shown with a dotted line, while the fixed infill 538 is shown with a solid line.

Without being limited to this or any other embodiment, by defining the infill 531 within the infill diagram 530, including the variable infill 536 and the fixed infill 538, the positioning of the infill 531 throughout the structure 500 may be determined. As a result, as layers of extrudable building material are deposited via a printing operation to form the structure 500, the infill 531 from the various layers may be properly aligned throughout the vertical height of the structure 500. In some embodiments, the infill diagram 530 may be derived (e.g., wholly or partially) by the controller 209 and/or the interface device 260.

Referring now to Figs. 13 and 19, once the diagrams 510, 520, 530 are derived and defined for the structure 500 to provide a three-dimensional representation, a master level 550 (e.g., a master printer instruction) may be defined for creating two-dimensional slices or layers that represents or depicts the shared or common features of the various vertical sections or slices of the structure 500 for construction operations. In this embodiment, the master level 550 is defined by combining many of the defined or determined parameters from each of the diagrams 510, 520, 530 shown in Figs. 14 to 17. For example, the master level or printing instruction 550 may be derived by combining and superimposing the borders 522, the infill 531 (including the fixed infill 538, and the variable infill 536) from the diagrams 520, 530 that are shared among multiple vertical slices of the structure 500 into a single cross-sectional diagram.

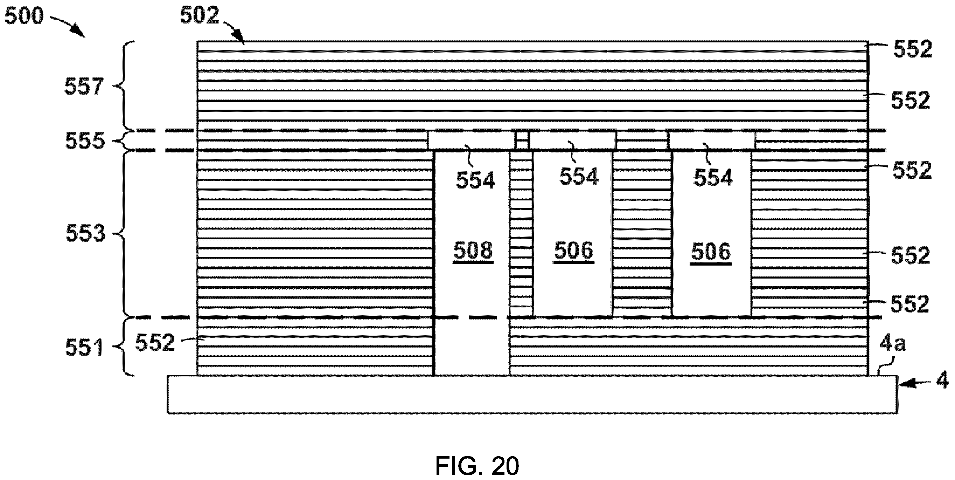

Referring briefly to Fig. 20, as previously described above, according to embodiments disclosed herein, the structure 500 may be constructed via a three-dimensional printing operation using the three-dimensional printing system 10 disclosed herein. Specifically, during this process, layers 552 of extrudable building material (e.g., a cement mixture) are extruded and deposited one-by-one on a top surface 4a of a foundation 4 (which may comprise a concrete and rebar slab as previously described above), such that the plurality of stacked layers 552 form the structure 500. As used herein, the term "level" refers to a subset of vertically adjacent layers 552 within the structure 500 (e.g., such as levels 551, 553, 555, 557 shown in Fig. 20 and discussed in more detail below). Accordingly, the master level 550 of Fig. 19 is a derived layer or slice of the structure 500 that may be imaginary (e.g., the master level 550 may not represent an actual layer or slice of the physical structure 550). Once derived, the master level 550 may be used to define the shared or common parameters and features of some or all of the layers making up the structure 500 for creating the respective printing instructions 253. As a result, the design of each of the individual layers of the structure 500 may be derived as a variant of the master level 550, so that common features (e.g., the borders 522, infill, etc.) are properly carried into each of the layers (as defined in the respective printer instructions 253) during printing operations. Without being limited to this or any other embodiment, by designing each of the actual layers of structure 500 from an imaginary master level 550 that includes many of the shared or common components of the actual layers, vertical alignment of the shared features may be more readily and reliably achieved within structure 500.

Referring now to Figs. 16 and 19, the master level 550 shows all of the windows 506 and door frames 508 of the structure 500 open. In addition, the master level 550 may include all infill 531 (e.g., the fixed infill 538 and the variable infill 536 in Fig. 16) and the borders 522 that are shared by multiple layers of the structure 500. Specifically, in this embodiment, the master level 550 may include all fixed infill 538 and all of the borders 522 from the shell diagram 520, including the end-cap ribs 533. As described in more detail below, the end cap ribs 533 are not included within the vertical slice of the structure 500 that includes the structural headers above the window 506 or door frames 508 (see headers 554 in Fig. 20 which are discussed in more detail below). However, because the end cap ribs 533 are included within most of the other vertical slices within the structure 500 (e.g., see the layers 551, 553, 557 of the structure 500 shown in Fig. 20), they are also included within the master level 500. In this embodiment, the master level 550 is identical to the instructions defining the layer 553 shown in Fig. 20. However, this results from the specific design of the structure 500. In other embodiments, the master level 550 may not identically match any of the sections or slices of the final structure (e.g., the structure 500) as previously described above.

Referring now to Figs. 19 and 20, the master level 550, once derived, is used as a starting point to define specific vertical levels of the structure 500, as previously described above. For example, as shown in Fig. 20, the structure 500 includes a total of four difference levels - namely a first level 551 extending vertically from top surface 4a of foundation 4 (wherein foundation 4 is the same as previously described above for structure 5) to the lower end of the windows 506, a second level 553 extending from the lower end of the windows 506 to the headers 554 of each of the windows 506 and door 508, a third level 555 that extends vertically through the vertical height of the headers 554, and a fourth level 557 that extends vertically from the top of the headers 554 to the top of the walls 502, 504 of the structure 500. The layers 552 of extrudable building material (e.g., a cement mixture) making up each level 551, 553, 555, 557 are identical within each level (e.g., the levels 551, 553, 555, 557).

Thus, the construction of each level 551, 553, 555, 557 via a three-dimensional printing operation may be described or represented as a repeatable set of lateral printing assembly movements (e.g., via printing assembly 100) relative to the foundation 4 that are separated by an incrementally increasing vertical height (e.g., the height of each extruded layer of building material). Accordingly, the construction of the structure 500 may then be described or represented as a finite set of lateral printing assembly movements that are each repeated a predetermined number of times, with an incrementally increasing vertical height at each repetition, where each specific lateral printing assembly movement is associated with one of the levels 551, 553, 555, 557. The specific lateral printing movement associated with a given level 551, 553, 555, 557 may also be represented as a set of instructions (e.g., printer-readable instructions) that are executed by a processor (e.g., processor 204) of a controller (e.g., controller 209 or other computing device) associated with the system 10 used to construct the structure 500. Each of the specific levels 551, 553, 555, 557 of the structure 500 is described with more specificity below with reference to Figs. 20 to 24.

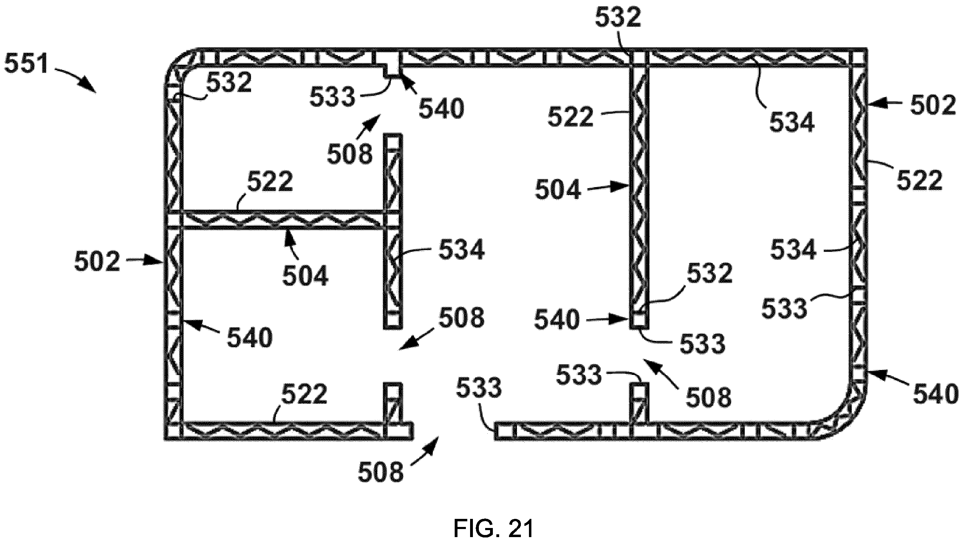

Specifically, referring first to Figs. 20 and 21, the first level 551 represents the lowermost vertical level of the structure 500. Thus, the layers 552 forming first level 551 are stacked directly on the top surface 4a of the foundation 4. In addition, within the first level 551, only door frames 508 of the structure 500 are open (see also Fig. 13), since the first level 551 is disposed below the lower ends of the windows 506. Accordingly, the first level 551 includes the borders 522 from master level 550 but also includes additional borders 552 disposed along the locations of the windows 506. Additionally, the first level 551 includes all of the infill 531 (e.g., the fixed infill 538) disposed within the master level 550 (see Fig. 19), and also the variable infill 536 that is disposed along the windows 506 (see the infill diagram 530 in Figs. 16 and 17). As a result, the first level 551 may be defined as the master level 550 from Fig. 19 with additional borders 522 and infill (e.g., the variable infill 536) that is disposed along the locations of the windows 506.

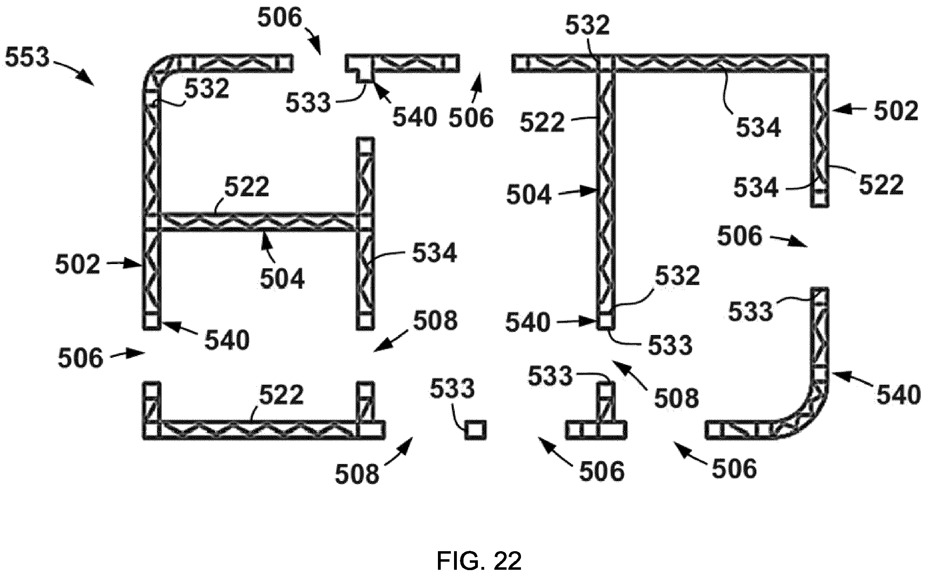

Referring now to Figs. 20 and 22, the second level 553 represents the slice of the structure 500 that is vertically adjacent to the first level 551 and extends vertically through the windows 506 and to the top of the door frames 508. Thus, the second level 553 includes all of the borders 522 (including the end cap ribs 533) and the fixed infill 538 from the master level 550 (see Fig. 19). As a result, the second level 552 may be defined as being a copy of the master level 550.

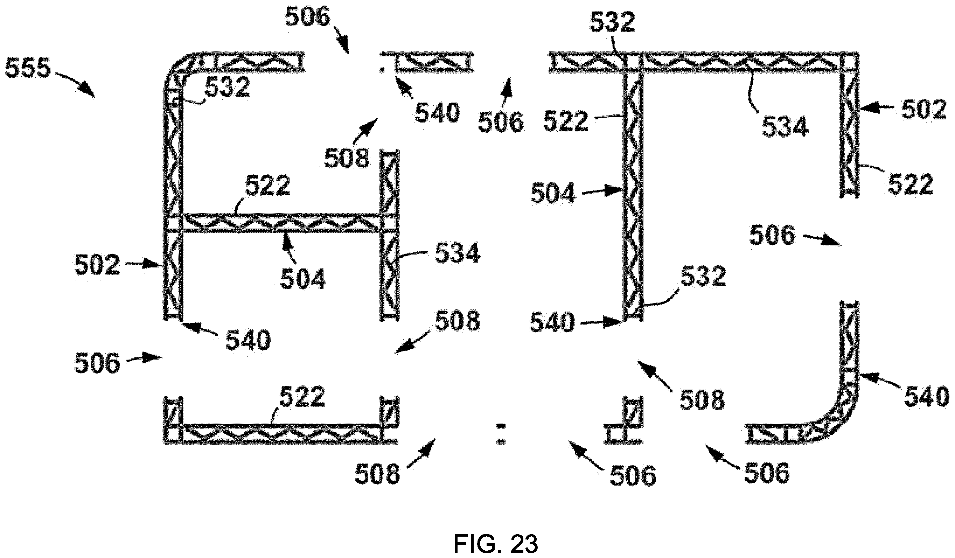

Referring now to Figs. 20 and 23, the third level 555 represents the slice or portion of the structure 500 that is encompassed by the headers 554 of the door frames 508 and the windows 506. Accordingly, the third level 555 may be defined as the master level 550 but with portions of the borders 522 (including the end cap ribs 533) removed to account for the placement of the headers 554 above the windows 506 and the door frames 508.

In this embodiment, the headers 554 comprise elongate members that are inserted immediately above a window 506 or door frame 508 to distribute weight around the edges or sides of the windows 506 and door frames 508. During construction of the structure 500, the headers 554 are manually inserted (e.g., by a worker) before, during, or after the printing or forming of the second level 553 by the corresponding three-dimensional printing system 10 disclosed herein. The headers 554 may comprise any suitable material, such as, for example steel, wood, concrete (e.g., such as a concrete plank or board). As shown in Fig. 20, in this embodiment, the headers 554 have the same vertical thickness as the two layers 552 of building material, and thus the third level 555 comprises the two layers 552. In other embodiments, the vertical thickness of the headers 554 may be more or less than the two layers 552.

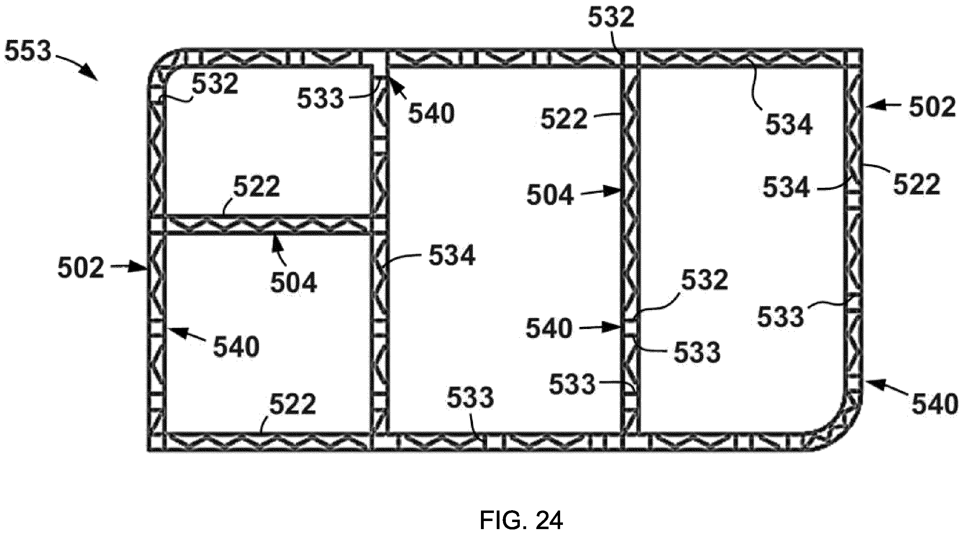

Finally referring to Figs. 20 and 24, the fourth level 557 extends vertically from the third level 555 (and thus from the headers 554) to the top of the walls 502, 504 (see Fig. 13). As can be appreciated from Fig. 20, the fourth level 557 is located vertically above all of the windows 506 and the door frames 508 of the structure 500. As a result, the fourth level 557 includes all of the borders 522 (including the end cap ribs 533) included within the master level 550 and additionally includes the borders 522 that extend along the locations of the windows 506 and the door frames 508. In addition, the fourth level 557 includes all of the infill 531 from the master level 550, and additionally includes the variable infill 536 that is defined by the infill diagram 530 for extending along the locations of the windows 506 and the door frames 508. Therefore, the fourth level 557 may be defined as the master level 550 with additional borders 522 and infill that extend along the locations of the windows 506 and door frames 508 within the structure 500.

Referring again to Figs. 20 to 24, together, each of the levels 551, 553, 555, 557 may be used to form or print the structure 500. Specifically, during a printing operation, the three-dimensional printing system 10 (e.g., via a central controller, such as the controller 209) may first be directed to print a predetermined number of vertically stacked layers 552 of the first level 551 using the respective instructions 253. Thereafter, the three-dimensional printing system 10 may be directed via the printer instructions 253 to print a predetermined number of vertically stacked layers 552 of the second level 553 atop the previously printed layers of the first level 551.

Next, the three-dimensional printing system 10 may be directed by the instructions 253 to print a predetermined number of vertically stacked layers 552 of the third level 555 atop the previously printed layers of second level 553. The third level 555 includes the headers 554, as previously described above. In some embodiments, the headers 554 may be placed in their positions atop the second level 553 prior to initiating construction (e.g., printing) operations of the third level 555. In other embodiments, the headers 554 may be placed simultaneously or concurrently with printing the third level 555. In still other embodiments, the headers 554 may be placed in their respective positions after the layers 552 of the third level 555 have been printed.

Regardless of the precise order or method used to place headers 554 within the third level 555, once the third level 555 (including the headers 554) is printed, the three-dimensional printing system 10 is directed by instructions to print a predetermined number of vertically stacked layers 552 of the fourth level 557 atop the third level 553 and the headers 554. Following the printing of fourth level 557, a roof or other top covering (not shown) may be constructed atop the fourth level 557 to complete the structure 500. In some embodiments, the roof may be constructed atop the fourth level 557 after all of the levels 551, 553, 555, 557 have fully dried and cured (which may take one or several days or possibly weeks). In other embodiments, the roof may be constructed or installed atop the fourth level 557 once levels 551, 553, 555, 557 are partially (but not completely) dried and/or cured.

Accordingly, the structure 500 is constructed via a three-dimensional printing operation, by reducing the structure down to finite sets of repeatable printing instructions 253 or plans. These sets of instructions 253 may be executed by the controller 209 to print or build the structure 500 layer by layer 552, and level by level (e.g., levels 551, 553, 555, 557). It should be appreciated that during the printing operations described above, no forms or molds are included to contain or channel the deposited or printed extrudable building material. The extruable building material may be configured to stiffen relatively quickly after being deposited by the printing assembly 100 either on the top surface 4a of the foundation 4 or on a previously printed layer 552. However, in some embodiments, the building material does not stiffen so quickly so as not to adequately bind to the next adjacent vertical layers 552 that are subsequently deposited thereon.

Referring still to Figs. 20 to 24, to facilitate the printing or forming of each layer 552 of the levels 551, 553, 555, 557 of the structure 500 as described above, a printing assembly toolpath or a plurality of such toolpaths may be defined for depositing the layers 552 of each level 551, 553, 555, 557. The toolpaths may be expressed as sets of instructions 253 (e.g., printer readable instructions) for actuating the printing assembly relative to the foundation 4 (e.g., laterally relative to the foundation 4) as the printing assembly deposits beads of printing material (e.g., cement) thereon. Thus, in some embodiments, the instructions 253 for the toolpaths may comprise instructions for actuating one or more drivers that cause or drive a movement of a printing assembly 100 along a defined set of directions or axes (e.g., the axes 12, 14, 16).

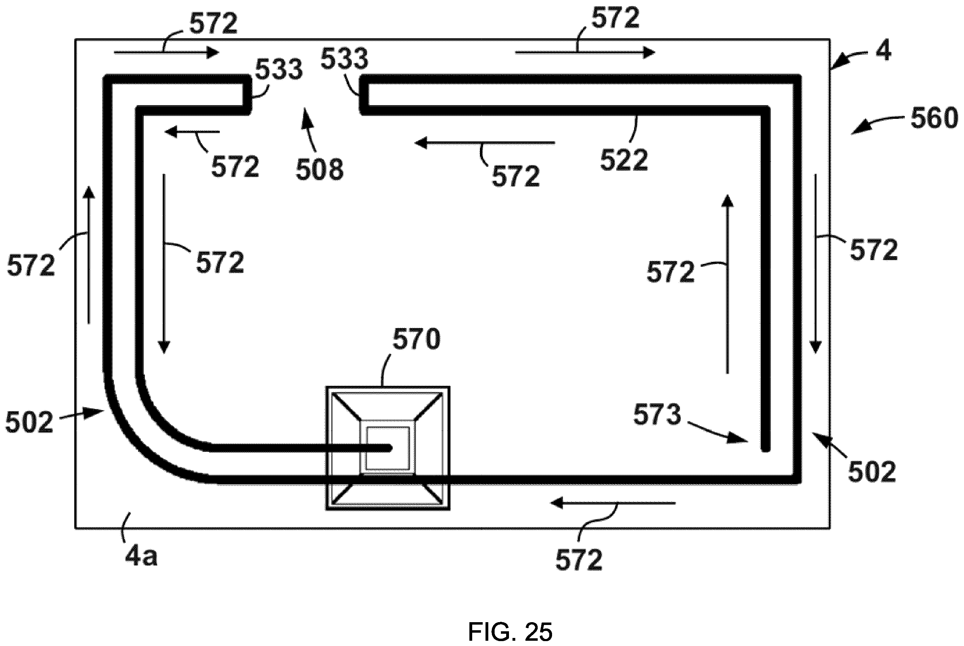

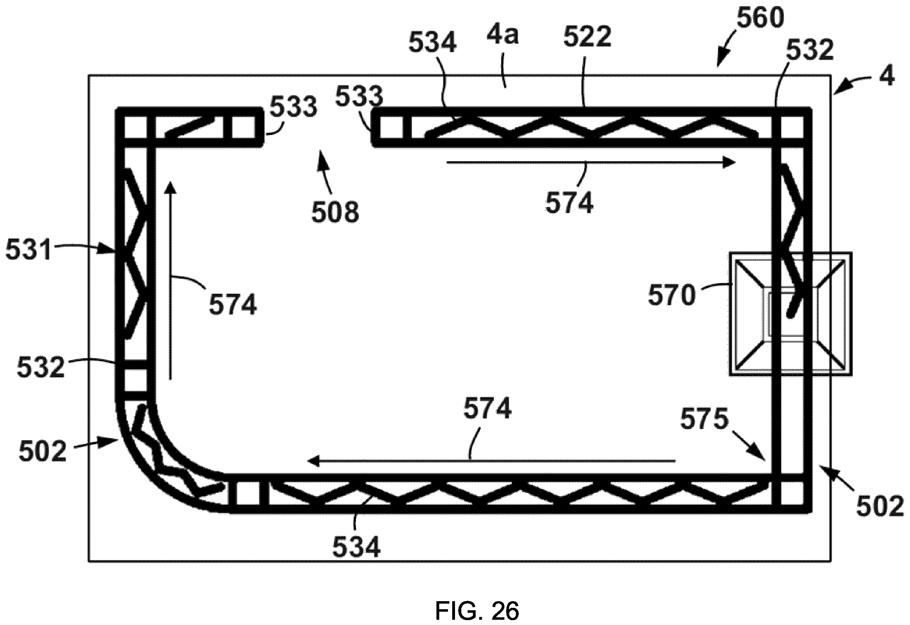

Referring now to Figs. 25 and 26, which show sequential schematic views of a printing operation for a single layer 552 of a level of another structure 560. The example structure 560 is a single room structure that includes a plurality of exterior walls 502 and a single door frame 508. As with the structure 500, previously described, the walls 502 of the structure 560 are defined by a plurality of borders 522 (including end cap ribs 533 at a door frame 508). In addition, infill 531, which further includes ribs 532 and lattice 534, is disposed within the borders 522 of walls 502.

Referring first to Fig. 25, during a printing operation for a layer (e.g., layer 552) of the structure 560, a printing assembly 570 (which may be the same or similar to printing assembly 100 previously described) is first traversed about a foundation in a first toolpath 572 while simultaneously extruding lines or beads of building material (e.g., cement) to form the outer borders 522 of the walls 502.

The first toolpath 572 of the printing assembly 570 may include a plurality of movements. For example, in this embodiment, toolpath 572 defines movement of the printing assembly 570 along the borders 522 of the walls 502. In particular, the printing assembly 570 is traversed across the foundation 4 from a starting position 573 along a continuous path while the printing assembly 570 deposits a line of extrudable building material (e.g.., a cement mixture) that forms the connected borders 522 of the walls 502. In this embodiment, because the structure 560 only includes the exterior walls 502, all of the walls 502 are interconnected such that one single continuous movement of the printing assembly 570 that starts and ends at the starting point 573 may be performed to print an enclosed border 522. In other embodiments (e.g., such as when printing the levels 551, 553, 555, 557 of the structure 500), the printing assembly 570 may be traversed along a plurality of loops or routes to form a continuous enclosed border 522 about each connected set of walls 502, 504 (see e.g., the separate enclosed borders 522 of the shell diagram 520 in Fig. 15).

Referring specifically to Fig. 26, after the borders 522 of the walls 502 are formed or printed by the printing assembly 570, the printing assembly 570 may then be traversed along a second toolpath 574 while simultaneously extruding lines or bands of extrudable building material (e.g., a cement mixture) to form the infill 531, including ribs 532 and lattice 534 within the borders 522. The second toolpath 574 may include a plurality of movements and defined by one or more instructions 253. For example, in this embodiment, the toolpath 574 moves the printing assembly 570 along the walls 502 from a starting point 575 along a continuous path that tracks generally along the walls 502. As the printing assembly 570 advances along the walls 502 and the toolpath 574, it is maneuvered as necessary to form the ribs 532 and the lattice 534 in desired locations (e.g., the printing assembly 570 may be moved in a zig-zag pattern as part of the toolpath 574 to form the lattice 534). In this embodiment, because the structure 560 only includes the exterior walls 502 and all the walls 502 are interconnected as previously described, one single continuous movement of the printing assembly 570 may be defined for the second toolpath 574 that starts and ends at the starting point 575. In other embodiments, (e.g., such as when printing the levels 551, 553, 555, 557 of the structure 500), the printing assembly 570 may be traversed along a plurality of loops or routes to form the infill (e.g., including the ribs 532 and the lattice 534) within the enclosed border 522 of each connected set of the walls 502, 504.

In some embodiments, the final toolpaths for the printing assembly 570 (e.g., the toolpaths 572, 574) when printing a layer of a level of a structure (e.g., the structures 560, 500, etc.) may be determined by first calculating or otherwise determining some or all of the possible toolpaths that may be taken to form the borders 522, the ribs 532, and/or the lattice 534 of a given level. Thereafter, the most efficient of the plurality of calculated toolpaths may be chosen as the final path(s) for the printing assembly 570.

### Conclusion

It should be understood that various changes and modifications to the presently preferred embodiments described herein will be apparent to those skilled in the art. Such changes and modifications can be made without departing from the spirit and scope of the present subject matter and without diminishing its intended advantages. It is therefore intended that such changes and modifications be covered by the appended claims.

## Claims

1. A three-dimensional print control apparatus comprising:
a memory device (205) storing a model file (252) of a building structure to be printed, the model file specifying a three-dimensional representation of the building structure; and
a control processor (204) communicatively coupled to the memory device (205), the control processor configured to:
receive a message that the model file is to be printed by a robotic three-dimensional printer (10) to form the building structure,
partition the model file into individual layers, each layer having a height corresponding to a height of a printed layer that is extruded by the robotic three-dimensional printer,
convert the layers into computerized instructions (253) for the robotic three-dimensional printer, each computerized instruction specifying at least a height specified in a z-dimension and a toolpath having a direction and a length specified in x and y-dimensions,
transmit a first computerized instruction for a first layer to the robotic three-dimensional printer causing the robotic three-dimensional printer to print the first layer of a first print level,
receive adjustment information that is indicative of an adjustment made by the robotic three-dimensional printer during the printing of the first layer of the first print level,
apply the adjustment information to at least a second computerized instruction for a second layer of the first print level, and
transmit the second computerized instruction to the robotic three-dimensional printer causing the robotic three-dimensional printer to print the second layer of the first print level including the adjustment made during the printing of the first layer.

2. The apparatus of Claim 1, wherein the adjustment information is received from an interface device (260) or from the robotic three-dimensional printer (10) and corresponds to a manual change that causes the robotic three-dimensional printer to deviate from at least some of the first computerized instructions.

3. The apparatus of Claims 1 or 2, wherein the adjustment information includes a change to at least one of the height of the first print level, the toolpath of the first layer, or the height of the first layer.

4. The apparatus of Claims 1, 2, or 3, wherein the control processor (204) is configured to apply the adjustment information to remaining computerized instructions for the first print level.

5. The apparatus of Claims 1, 2, or 3, wherein the control processor (204) is configured to apply the adjustment information to remaining computerized instructions for layers that are to be printed on top of the first layer.

6. The apparatus of Claim 1, wherein the height of each layer is between 0.5 inches and 2 inches for printing concrete and the height of the levels is between 2 inches and fifty feet.

7. The apparatus of Claim 1, wherein each of the print levels includes a print start location and a print finish location that is used for each of the layers for the respective print level.

8. The apparatus of Claim 7, wherein at least one of the print levels includes a print start pause location and a print finish pause location for the layers of the respective print level.

9. The apparatus of Claim 1, wherein the first computerized instructions and the second computerized instructions include G-code for a toolpath of the robotic three-dimensional printer.

10. The apparatus of Claim 1, wherein the model file (252) includes at least one of a two-dimensional or a three-dimensional digital representation of the building structure.

11. The apparatus of Claims 1 or 10, wherein the building structure includes at least one of a residential structure, a commercial structure, a government structure, a garage, a storage shed, a warehouse, utility lines, a wall, a tunnel, a launch pad, furniture, or a landscaping element.

12. The apparatus of Claims 1, 10, or 11, wherein the control processor (204) partitions the model file by creating two-dimensional cross-sections at different heights of the building structure.

13. A model generation method for printing three-dimensional structures, the method comprising:
receiving, in a build processor (204), a selection of a build planning function (404), among a plurality of build planning functions stored in a memory device (402), for printing a three-dimensional structure related to the selected build planning function;
determining, via the build processor (204), global build data (406) associated with the selected build planning function;
prompting, via the build processor (204) on a user interface (260), a user to provide input parameters including site/location data (412), code requirements (414), owner preferences (410), and builder preferences (408);
using, via the build processor (204), at least one build function of the build planning function, the global build data, and the input parameters to create a build plan (420) having a list of actions for a robotic three-dimensional printer (10); and
transmitting at least some of the build plan as G-code to the robotic three-dimensional printer for printing the three-dimensional structure.

14. The method of Claim 13, wherein the build plan includes placement once information, placement level information, a parametric build function that specifies a printing action based on pre-specified data, or a transform function that specifies toolpath variation based on specified coordinates, and
wherein the build plan optionally includes a transfer function that changes a toolpath based on at least one of a timestamp when the printing is performed, live data from an Internet feed, or a locally-connected sensor

15. The method of Claims 13 or 14, wherein the plurality of build planning functions includes build planning functions for at least one of a residential structure, a commercial structure, a government structure, a garage, a storage shed, a warehouse, utility lines, a wall, a tunnel, a launch pad, furniture, or a landscaping element.

16. The method of Claims 13, 4, or 15 wherein each of the plurality of build planning functions is associated with different configurations of input data, and
wherein the global build data includes at least one of standard international building code data, climate zone data, historical weather, data, or seismic zone data.

17. The method of Claim 13, wherein prompting includes providing, via the building processor, a selection of a template from a plurality of templates, each template including a data structure having variable parameter references provided by the user to specify the respective parameter, and
wherein the plurality of templates includes one or more templates for each of the site/location data, the code requirements, the owner preferences, and the builder preferences.
